(19) Europäisches Patentamt
European Patent Office
Office européen des brevets

(11) EP 4 113 178 A1

(12) EUROPEAN PATENT APPLICATION
published in accordance with Art. 153(4) EPC

(43) Date of publication:
**04.01.2023 Bulletin 2023/01**

(21) Application number: **21761653.1**

(22) Date of filing: **26.02.2021**

(51) International Patent Classification (IPC):
***G02B 5/30*** (2006.01) ***B42D 25/364*** (2014.01)
***B42D 25/391*** (2014.01) ***B32B 7/12*** (2006.01)
***B32B 3/14*** (2006.01)

(52) Cooperative Patent Classification (CPC):
**B32B 3/14; B32B 7/12; B42D 25/364; B42D 25/391; G02B 5/30**

(86) International application number:
**PCT/JP2021/007544**

(87) International publication number:
**WO 2021/172567 (02.09.2021 Gazette 2021/35)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **28.02.2020 JP 2020033926**

(71) Applicant: **Zeon Corporation**
**Tokyo 100-8246 (JP)**

(72) Inventor: **IKEDA, Akira**
**Tokyo 100-8246 (JP)**

(74) Representative: **Hansen, Norbert**
**Maiwald GmbH**
**Elisenhof**
**Elisenstraße 3**
**80335 München (DE)**

# (54) DISPLAY MEDIUM, METHOD FOR MANUFACTURING SAME, AND DISPLAY ARTICLE

(57) A display medium comprising: a substrate; and a display layer provided on the substrate, wherein the display layer includes a plurality of small-piece layers sectioned by a split, and the plurality of small-piece layers are provided to be arrayed in two or more directions as viewed in a thickness direction.

FIG.3

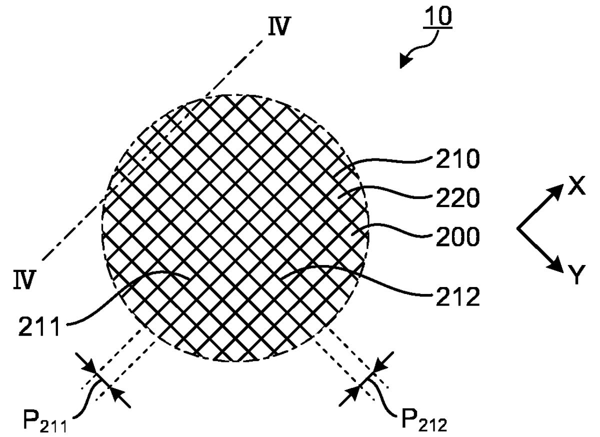




Processed by Luminess, 75001 PARIS (FR)

## Description

Technical Field

The present invention relates to a display medium and a method for producing the same, and a display article including the display medium.

Background Art

From the viewpoint of diversification of display modes of an article, a display mode using polarized light may be employed. In order to achieve such a display mode using polarized light, a liquid crystal material is conventionally used in some cases. The liquid crystal material is also used for determination of authenticity. Examples of these techniques may include techniques described in Patent Literature 1 to 3.

Citation List

Patent Literature

Patent Literature 1: Japanese Patent Application Laid-Open No. 2010-105327 A
Patent Literature 2: Japanese Patent Application Laid-Open No. 2014-174471 A
Patent Literature 3: Japanese Patent No. 4630465

Summary of The Invention

Technical Problem

A display medium using polarized light is generally difficult to counterfeit but is required to be more difficult to counterfeit.

The present invention has been made in view of the above-mentioned problems, and an object thereof is to provide a display medium in which the difficulty of counterfeiting is increased and a method for producing the same; and a display article including the display medium.

Solution to Problem

The present inventor intensively conducted research for solving the above-mentioned problems. As a result, the present inventor has found that the above-mentioned problems can be solved by providing a display layer with small-piece layers arrayed with high regularity. Thus, the present invention has been accomplished.

That is, the present invention includes the following.

<1> A display medium comprising: a substrate; and a display layer provided on the substrate, wherein

the display layer includes a plurality of small-piece layers sectioned by a split, and
the plurality of small-piece layers are provided to be arrayed in two or more directions as viewed in a thickness direction.

<2> The display medium according to <1>, wherein a thickness of the small-piece layers is 10 μm or less.
<3> The display medium according to <1> or <2>, wherein the small-piece layers are formed of a cured product of a liquid crystal composition.
<4> The display medium according to any one of <1> to <3>, wherein an in-plane retardation of the small-piece layers at a measurement wavelength of 550 nm is "$\{(2n_1 + 1)/4\} \times 550$ nm - 30 nm" or more and "$\{(2n_1 + 1)/4\} \times 550$ nm + 30 nm" or less ($n_1$ represents an integer larger than or equal to 0).
<5> The display medium according to any one of <1> to <3>, wherein an in-plane retardation of the small-piece layers at a measurement wavelength of 550 nm is "$\{(2n_2 + 1)/2\} \times 550$ nm - 30 nm" or more and "$\{(2n_2 + 1)/2\} \times 550$ nm + 30 nm" or less ($n_2$ represents an integer larger than or equal to 0).
<6> The display medium according to any one of <1> to <5>, wherein the small-piece layers are one or more types selected from the group consisting of positive A plates, positive C plates, tilted O plates, and tilted hybrid orientation

plates.

<7> The display medium according to any one of <1> to <3>, wherein the small-piece layers have a display wavelength range in which the small-piece layers are capable of reflecting circularly polarized light having one rotating direction $D_D$ and transmitting circularly polarized light having a rotating direction opposite to the rotating direction $D_D$.

<8> The display medium according to any one of <1> to <7>, wherein the substrate comprises a selective reflection layer having a substrate reflection range in which the selective reflection layer is capable of reflecting circularly polarized light having one rotating direction $D_S$ and transmitting circularly polarized light having a rotating direction opposite to the rotating direction $D_S$.

<9> The display medium according to <7>, wherein:

the substrate comprises a selective reflection layer having a substrate reflection range in which the selective reflection layer is capable of reflecting circularly polarized light having one rotating direction $D_S$ and transmitting circularly polarized light having a rotating direction opposite to the rotating direction $D_S$; and

a wavelength width of the substrate reflection range is wider than a wavelength width of the display wavelength range.

<10> The display medium according to <8> or <9>, wherein the wavelength width of the substrate reflection range is 70 nm or more.

<11> The display medium according to any one of <1> to <10>, comprising a plurality of the display layers.

<12> The display medium according to any one of <1> to <11>, wherein a shape of the small-piece layer as viewed in the thickness direction is a rectangle.

<13> The display medium according to any one of <1> to <12>, wherein a width of the small-piece layer as viewed in the thickness direction is 100 μm or less.

<14> The display medium according to any one of <1> to <13>, wherein the substrate includes a colored layer.

<15> The display medium according to any one of <1> to <14>, comprising an adhesive layer between the substrate and the display layer.

<16> A method for producing the display medium according to any one of <1> to <15>, comprising:

a step of preparing a primary member including a temporary supporting body and a transfer material layer formed on the temporary supporting body and including the small-piece layers;

a step of forming on the substrate an adhesive layer with a same shape as that of the display layer as viewed in the thickness direction;

a step of attaching the transfer material layer and the adhesive layer to each other; and

a step of detaching the temporary supporting body.

<17> A display article comprising: a foundation article; and the display medium according to any one of <1> to <15> provided on the foundation article.

## Advantageous Effects of Invention

According to the present invention, it is possible to provide a display medium in which the difficulty of counterfeiting is increased and a method for producing the same; and a display article including the display medium.

## Brief Description of Drawings

FIG. 1 is a schematic plan view of a display medium according to a first embodiment of the present invention as viewed in a thickness direction.

FIG. 2 is a cross-sectional view schematically illustrating a cross section, taken along II-II plane illustrated in FIG. 1, of the display medium according to the first embodiment of the present invention.

FIG. 3 is an enlarged plan view schematically illustrating a III area, illustrated in FIG. 1, of the display medium according to the first embodiment of the present invention in an enlarged manner.

FIG. 4 is a cross-sectional view schematically illustrating a cross section, taken along IV-IV plane illustrated in FIG. 3, of the display medium according to the first embodiment of the present invention.

FIG. 5 is a schematic plan view of a primary member prepared in the method for producing the display medium according to the first embodiment of the present invention, as viewed in the thickness direction.

FIG. 6 is a cross-sectional view schematically illustrating a cross section, taken along VI-VI plane illustrated in FIG.

5, of the primary member prepared in the method for producing the display medium according to the first embodiment of the present invention.

FIG. 7 is an enlarged plan view schematically illustrating a VII area, illustrated in FIG. 5, of the primary member prepared in the method for producing the display medium according to the first embodiment of the present invention in an enlarged manner.

FIG. 8 is a cross-sectional view schematically illustrating a cross section, taken along a VIII-VIII plane illustrated in FIG. 7, of the primary member prepared in the method for producing the display medium according to the first embodiment of the present invention.

FIG. 9 is a perspective view schematically illustrating an example of a processing tool that may be used in a method for producing the primary member in the method for producing the display medium according to the first embodiment of the present invention.

FIG. 10 is a perspective view schematically illustrating the processing tool illustrated in FIG. 9.

FIG. 11 is a plan view schematically illustrating a state in which the processing tool in FIG. 10 is cut along line XI-XI and developed.

FIG. 12 is a partial cross-sectional view schematically illustrating a cross section of a part of the proximity of the surface of the processing tool cut along a plane perpendicular to a direction in which a convex portion extends.

FIG. 13 is a perspective view schematically illustrating an example of a processing tool that may be used in a method for producing the primary member in the method for producing the display medium according to the first embodiment of the present invention.

FIG. 14 is a perspective view schematically illustrating the processing tool illustrated in FIG. 13.

FIG. 15 is a plan view schematically illustrating a state in which the processing tool of FIG. 14 is cut along line XV-XV and developed.

FIG. 16 is a schematic plan view of a display medium according to a second embodiment of the present invention as viewed in the thickness direction.

FIG. 17 is a cross-sectional view schematically illustrating a cross section, taken along XVII-XVII plane illustrated in FIG. 16, of the display medium according to the second embodiment of the present invention.

FIG. 18 is an enlarged plan view schematically illustrating a XVIII area, illustrated in FIG. 16, of the display medium according to the second embodiment of the present invention in an enlarged manner.

FIG. 19 is a schematic plan view of a display medium according to a third embodiment of the present invention as viewed in the thickness direction.

FIG. 20 is a cross-sectional view schematically illustrating a cross section, taken along XX-XX plane illustrated in FIG. 19, of the display medium according to the third embodiment of the present invention.

FIG. 21 is an enlarged plan view schematically illustrating a XXI area, illustrated in FIG. 19, of the display medium according to the third embodiment of the present invention in an enlarged manner.

FIG. 22 is a plan view schematically illustrating a display medium produced in Example 101.

FIG. 23 is a cross-sectional view schematically illustrating the display medium produced in Example 101.

Description of Embodiments

Hereinafter, the present invention will be described in detail with reference to embodiments and examples. However, the present invention is not limited to the embodiments and examples described hereinafter, and may be freely modified for implementation without departing from the scope of claims of the present invention and the scope of their equivalents.

In the following description, an in-plane direction represents a direction perpendicular to a thickness direction unless otherwise specified.

In the following description, an in-plane retardation Re of a layer is a value represented by Re = (nx - ny) $\times$ d unless otherwise specified. Herein, nx represents a refractive index in a direction in which the maximum refractive index is given among directions perpendicular to the thickness direction of the layer (in-plane directions); ny represents a refractive index in a direction, among the above-mentioned in-plane directions of the layer, orthogonal to the direction giving nx; nz represents a refractive index in the thickness direction; and d represents the thickness of the layer. The measurement wavelength is 550 nm unless otherwise specified.

In the following description, "circularly polarized light" also includes elliptically polarized light as long as the advantageous effects of the present invention are not significantly impaired.

In the following description, a direction of an element being "parallel", "perpendicular" and "orthogonal" may allow an error within the range of not impairing the advantageous effects of the present invention, for example, within a range of $\pm 4°$, preferably $\pm 3°$, more preferably $\pm 1°$, unless otherwise specified.

In the following description, the term "visible wavelength range" refers to a wavelength range of 400 nm or longer and 780 nm or shorter unless otherwise specified.

In the following description, a "long-length" refers to a shape with the length that is 5 times or more the width, and preferably a film shape with the length that is 10 times or more the width, and specifically refers to a film shape having a length that allows a film to be wound up into a rolled shape for storage or transportation. The upper limit of the length is not particularly limited, and may be 100,000 times or less the width, for example.

[1. Display medium according to first embodiment]

FIG. 1 is a schematic plan view of a display medium 10 according to a first embodiment of the present invention as viewed in the thickness direction. FIG. 2 is a cross-sectional view schematically illustrating a cross section, taken along plane II-II illustrated in FIG. 1, of the display medium 10 according to the first embodiment of the present invention.
As illustrated in FIGS. 1 and 2, the display medium 10 according to the first embodiment of the present invention includes a substrate 100 and a display layer 200 provided on this substrate 100.

[1.1. Substrate 100]

The substrate 100 is a member capable of supporting the display layer 200, and usually includes a support layer 110. There is no particular limitation on the material for forming the support layer, and an organic material, an inorganic material, and a composite material obtained by combining them may be used. Specific examples of the material of the support layer may include a resin, paper, cloth, leather, metal, an alloy, and glass. Among these, a resin is preferable from the viewpoint of facilitating production of the display medium 10 and exhibiting excellent flexibility.
As the resin, a thermoplastic resin is usually used. The thermoplastic resin may contain a polymer and, if necessary, an optional component. Examples of the polymer may include a polycarbonate, a polyether sulfone, a polyethylene terephthalate, a polyimide, a polymethyl methacrylate, a polysulfone, a polyarylate, a polyethylene, a polyphenylene ether, a polystyrene, a polyvinyl chloride, a cellulose diacetate, a cellulose triacetate, and an alicyclic structure-containing polymer. As the polymers, one type thereof may be solely used, and two or more types thereof may also be used in combination at any ratio. Among these, an alicyclic structure-containing polymer is suitable from the viewpoint of transparency, low hygroscopicity, size stability, and processability. The alicyclic structure-containing polymer is a polymer having an alicyclic structure in a main chain and/or a side chain, and, for example, those described in Japanese Patent Application Laid-Open No. 2007-057971 A may be used.
The in-plane retardation of the support layer 110 is not limited. In the present embodiment, an example in which an optically isotropic support layer 110 with a small in-plane retardation is used will be described. The in-plane retardation of the optically isotropic support layer 110 at a measurement wavelength of 550 nm is preferably 0 to 20 nm, more preferably 0 to 10 nm, and particularly preferably 0 to 5 nm.
The substrate 100 may be a transparent member that transmits light, or may be a non-transparent member that does not transmit light. In the present embodiment, a transparent substrate 100 capable of transmitting light will be described as an example.
The shape of the substrate 100 is not limited. The shape of the substrate 100 may be a plate shape, a sheet shape, a film shape, or the like. Among these, from the viewpoint of thinning the display medium 10, a film-like substrate 100 is preferable. In particular, when a long-length film is used as the substrate 100, the display medium 10 can be efficiently produced by a roll-to-roll method.
The thickness of the substrate 100 is not particularly limited, and is preferably 5 μm or more, more preferably 10 μm or more, and particularly preferably 20 μm or more, and is preferably 1 mm or less, more preferably 500 μm or less, and particularly preferably 200 μm or less.

[1.2. Display layer 200]

The display layer 200 is provided directly or indirectly on the substrate 100. Providing the display layer 200 "directly" on the substrate 100 means that there is no other layer between the substrate 100 and the display layer 200. Providing the display layer 200 "indirectly" on the substrate 100 means that there is another layer between the substrate 100 and the display layer 200.
Although the display layer 200 may be provided on the entirety of a surface 100U of the substrate 100, the display layer 200 is usually provided on a part of the surface 100U of the substrate 100.
For example, the display layer 200 may be provided in an area of the surface 100U with a specific shape as viewed in the thickness direction. In this case, the display layer 200 can have the specific shape as viewed in the thickness direction. Therefore, an observer who has observed the display medium 10 can visually recognize the shape.
For example, the display layer 200 may be provided in an area other than the area of the surface 100U with the specific shape as viewed in the thickness direction. In this case, the area provided with no display layer 200 can have the specific shape as viewed in the thickness direction. Therefore, an observer who has observed the display

medium 10 can visually recognize the shape.

Accordingly, in either case, improved design of the display medium 10 can be achieved.

Examples of the above-mentioned specific shape may include a letter, a number, a symbol, and a graphic. However, the specific shape is not limited to the above-mentioned examples. In the present embodiment, an example will be described in which the display layer 200 with the shape of the letter "T" as viewed in the thickness direction is provided as illustrated in FIG. 1.

FIG. 3 is an enlarged plan view schematically illustrating a III area, illustrated in FIG. 1, of the display medium 10 according to the first embodiment of the present invention in an enlarged manner. FIG. 4 is a cross-sectional view schematically illustrating a cross section, taken along IV-IV plane illustrated in FIG. 3, of the display medium 10 according to the first embodiment of the present invention.

As illustrated in FIGS. 3 and 4, the display layer 200 includes a plurality of small-piece layers 220 sectioned by splits 210. Specifically, the respective small-piece layers 220 are provided at different positions of the surface 100U of the substrate 100 and are divided by the splits 210. The splits 210 are formed in the entire thickness of the display layer 200 and are formed between the small-piece layers 220. A group of the plurality of assembled small-piece layers 220 forms one display layer 200.

The small-piece layers 220 included in one display layer 200 are provided to be arrayed in two or more directions as viewed in the thickness direction. In the following description, the direction in which the small-piece layers 220 are arrayed in this manner may be referred to as an "array direction". Each of these array directions is a direction perpendicular to the thickness direction and may thus be parallel to the layer plane of the display layer. Hence, usually, in a case in which a line segment connecting small-piece layers 220 adjacent to each other with the split 210 interposed therebetween is drawn, the line segment is parallel to either of the above-mentioned two or more array directions. The number of the array directions is usually 2 or more, preferably 4 or less, and more preferably 3 or less. For example, when the shape of the small-piece layer 220 as viewed in the thickness direction is a regular triangle, the number of the array directions of the small-piece layers 220 included in one display layer 200 may be 3. For example, when the shape of the small-piece layer 220 as viewed in the thickness direction is a rectangle, the number of the array directions of the small-piece layers 220 included in one display layer 200 may be 2. For example, when the shape of the small-piece layer 220 as viewed in the thickness direction is a regular hexagon, the number of the array directions of the small-piece layers 220 included in one display layer 200 may be 3.

Conventionally, it has been difficult to form a display layer as an assemble of small layers disposed with high regularity. For example, when a display layer is formed by applying, onto a substrate, a paint containing a pigment corresponding to a small layer, the pigment included in the obtained display layer is disposed at random and cannot achieve high regularity. Since the display layer 200 of the display medium 10 according to the present embodiment is formed by the small-piece layers 220 arrayed in two or more directions so as to be disposed with high regularity, the display layer 200 is highly difficult to produce by conventional techniques. Consequently, it is possible to increase the difficulty of counterfeiting of the display medium 10.

The angle between the array directions of the small-piece layers 220 included in one display layer 200 is usually 5° or more, more preferably 10° or more, still more preferably 30° or more, and particularly preferably 40° or more, and is usually 90° or less. In the present embodiment, an example will be described in which the small-piece layers 220 included in the display layer 200 are provided to be arrayed in a first array direction X perpendicular to the thickness direction and in a second array direction Y perpendicular to both the thickness direction and the array direction X as illustrated in FIG. 3.

The respective small-piece layers 220 included in one display layer 200 preferably have the same shape as viewed in the thickness direction. Since it is particularly difficult to produce the display layer 200 including one group of the small-piece layers 220 with the same shape, it is possible to effectively increase the difficulty of counterfeiting of the display medium 10.

The shape of each of the small-piece layers 220 as viewed in the thickness direction is not particularly limited. Preferable examples of the shape may include polygons such as a triangle, a quadrangle, and a hexagon. Among these, a regular triangle, a quadrangle, and a regular hexagon are preferable, a quadrangle is more preferable, a parallelogram is still more preferable, a rectangle such as a square and an oblong is still more preferable, and a square is particularly preferable.

The width of each of the small-piece layers 220 as viewed in the thickness direction is preferably in a specific range. Specifically, the width of the small-piece layer 220 is preferably 150 μm or less, more preferably 125 μm or less, still more preferably 100 μm or less, and particularly preferably 80 μm or less. The lower limit thereof is not particularly limited, and is usually more than 0 μm, and preferably 10 μm or more. The width of the small-piece layer 220 refers to the longest distance among distances between any parallel lines of a plurality of lines drawn so as to be in contact with the outline of the small-piece layer 220. Since such a small-sized small-piece layer 220 is difficult to visually recognize with the naked eye, it is possible to effectively increase the difficulty of counterfeiting of the display medium 10.

Since the small-piece layers 220 are provided to be arrayed in two or more array directions, the split 210

sectioning these small-piece layers 220 usually includes split lines 211 and 212 extending in two or more directions. When viewed in the thickness direction, the split 210 preferably includes a plurality of split lines 211 extending linearly in a certain direction and a plurality of split lines 212 extending linearly in a different direction from the certain direction. In addition, each of these split lines 211 and 212 more preferably extends linearly in a continuous manner over the entirety of the display layer 200. When such split lines 211 and 212 are employed, the small-piece layers 220 can be produced particularly smoothly.

When the split lines 211 and 212 extend linearly in a continuous manner over the entirety of the display layer 200, the split 210 may be provided in a grid pattern as a whole. The small-piece layers 220 sectioned by the split 210 may be arrayed in directions in which the above-mentioned split lines 211 and 212 extend. In the present embodiment, an example will be described in which the grid-shape split 210 including a first group of split lines 211 extending continuously and linearly in the first array direction X over the entirety of the display layer 200 and a second group of split lines 212 extending continuously and linearly in the second array direction Y over the entirety of the display layer 200 sections the rectangular small-piece layers 220 as illustrated in FIG. 3.

The pitches between split lines extending in the same direction among the split lines 211 and 212 included in the split 210 formed in one display layer 200 are preferably substantially the same. Therefore, in the example illustrated in the present embodiment, pitches $P_{211}$ between the split lines 211 extending in the array direction X are preferably substantially the same. Pitches $P_{212}$ between the split lines 212 extending in the array direction Y are preferably substantially the same. Herein, the expression that a certain pitch (a first pitch) and another pitch (a second pitch) between the split lines are substantially the same means that the second pitch is 90% or more and 110% or less of the first pitch. In this case, usually, the shapes of the respective small-piece layers 220 as viewed in the thickness direction can be the same, and it is thus possible to effectively increase the difficulty of counterfeiting of the display medium 10.

The pitches between split lines extending in different directions among the split lines 211 and 212 included in the split 210 formed in one display layer 200 are preferably substantially the same. Therefore, in the example illustrated in the present embodiment, the pitch $P_{211}$ between the split lines 211 extending in the array direction X and the pitch $P_{212}$ between the split lines 212 extending in the array direction Y are preferably substantially the same. In this case, usually, the regularity of the disposition of the respective small-piece layers 220 as viewed in the thickness direction can be increased, and it is thus possible to effectively increase the difficulty of counterfeiting of the display medium 10.

When the grid-shape split 210 sections the rectangular small-piece layers 220 as in the example illustrated in the present embodiment, the above-mentioned pitch $P_{211}$ between the split lines 211 and the above-mentioned pitch $P_{212}$ between the split lines 212 may be identical to the length of the corresponding edge of the small-piece layer 220. Even when the pitches $P_{211}$ and $P_{212}$ are not identical to the length of the edge of the small-piece layer 220, the pitches $P_{211}$ and $P_{212}$ may correlate with the size of the small-piece layer 220. Therefore, the pitches $P_{211}$ and $P_{212}$ are preferably set in accordance with the size of the small-piece layer 220.

Generally, the shorter each of the pitches $P_{211}$ and $P_{212}$ is, the smaller the size of the small-piece layer 220 is. The small-piece layer 220 having a smaller size is difficult to visually recognize with the naked eye, and it is thus possible to increase the difficulty of counterfeiting of the display medium 10. Accordingly, from the viewpoint of increasing the difficulty of counterfeiting of the display medium 10, each of the pitches $P_{211}$ and $P_{212}$ is preferably in a specific small range. Specifically, each of the pitches $P_{211}$ and $P_{212}$ is preferably 150 μm or less, more preferably 125 μm or less, still more preferably 115 μm or less, and particularly preferably 100 μm or less. The lower limit thereof is not particularly limited, and is generally more than 0 μm, and preferably 10 μm or more.

The thickness of the small-piece layers 220 is preferably 0.1 μm or more, more preferably 1 μm or more, and still more preferably 2 μm or more, and is preferably 10 μm or less, more preferably 8 μm or less, still more preferably 6 μm or less, and particularly preferably 5 μm or less. The thickness of the small-piece layers 220 contained in one display layer 200 may be different from one another, and may preferably be the same. When the small-piece layer 220 is thin, the size of the small-piece layer 220 as viewed in the thickness direction can be reduced, and it is thus possible to increase the difficulty of counterfeiting of the display medium 10.

The small-piece layers 220 may have an in-plane retardation. The small-piece layers 220 having an in-plane retardation and the display layer 200 containing the small-piece layers 220 can function as a phase difference plate, and the polarization state of the transmitted light can thus be adjusted. Therefore, various display modes can be realized in the display medium 10 by utilizing the adjustment of the polarization state by the small-piece layers 220 and the display layer 200.

For example, the small-piece layers 220 may have an in-plane retardation that allows the layer to be capable of functioning as a 1/4 wave plate. The specific in-plane retardation of the small-piece layers 220 that can function as a 1/4 wave plate is preferably "$\{(2n_1 + 1)/4\} \times 550$ nm - 30 nm" or more, more preferably "$\{(2n_1 + 1)/4\} \times 550$ nm - 20 nm" or more, and particularly preferably "$\{(2n_1 + 1)/4\} \times 550$ nm - 10 nm" or more, and is preferably "$\{(2n_1 + 1)/4\} \times 550$ nm + 30 nm" or less, more preferably "$\{(2n_1 + 1)/4 \times 550$ nm + 20 nm" or less, and particularly preferably "$\{(2n_1 + 1)/4 \times 550$nm + 10 nm" or less, at the measurement wavelength of 550 nm. Herein, $n_1$ represents an integer larger than or equal to 0. The small-piece layers 220 with the in-plane retardation Re in the above-mentioned range at the measurement

wavelength of 550 nm can usually function as a 1/4 wave plate in a wide range of the visible wavelength range. Thus, the small-piece layers 220 and the display layer 200 containing the small-piece layers 220 can appropriately adjust the polarization state of the transmitted light of a wide variety of colors. Therefore, since the latitude of the color of the display layer 200 can be increased, it is possible to realize the display medium 10 having an advanced design.

For example, the small-piece layers 220 may have an in-plane retardation that allows the layer to be capable of functioning as a 1/2 wave plate. The specific in-plane retardation of the small-piece layers 220 that can function as a 1/2 wave plate is preferably "$\{(2n_2 + 1)/2\} \times 550$ nm - 30 nm" or more, more preferably "$\{(2n_2 + 1)/2\} \times 550$ nm - 20 nm" or more, and particularly preferably "$\{(2n_2 + 1)/2\} \times 550$ nm - 10 nm" or more, and is preferably "$\{(2n_2 + 1)/2\} \times 550$ nm + 30 nm" or less, more preferably "$\{(2n_2 + 1)/2\} \times 550$ nm + 20 nm" or less, and particularly preferably "$\{(2n_2 + 1)/2\} \times 550$ nm + 10 nm" or less, at the measurement wavelength of 550 nm. Herein, $n_2$ represents an integer larger than or equal to 0. The small-piece layers 220 with the in-plane retardation Re in the above-mentioned range at the measurement wavelength of 550 nm can usually function as a 1/2 wave plate in a wide range of the visible wavelength range. Thus, the small-piece layers 220 and the display layer 200 containing the small-piece layers 220 can appropriately adjust the polarization state of the transmitted light of a wide variety of colors. Therefore, since the latitude of the color of the display layer 200 can be increased, it is possible to realize the display medium 10 having an advanced design.

The in-plane retardation of the small-piece layers 220 contained in one display layer 200 may be different from one another, and may preferably be the same.

There is no particular limitation on the wavelength dispersion property of the small-piece layers 220. Therefore, the small-piece layers 220 may have a normal wavelength dispersion property or a reverse wavelength dispersion property. A normal wavelength dispersion property means that the in-plane retardations Re(450) and Re(550) at the measurement wavelengths of 450 nm and 550 nm satisfy the following formula (R1). In general, the longer the measurement wavelength is, the smaller the in-plane retardation of the small-piece layers 220 having the normal wavelength dispersion property is. A reverse wavelength dispersion property means that the in-plane retardation Re(450) and Re(550) at the measurement wavelengths of 450 nm and 550 nm satisfy the following formula (R2). In general, the longer the measurement wavelength is, the larger the in-plane retardation of the small-piece layers 220 having the reverse wavelength dispersion property is.

$$Re(450) > Re(550) \quad (R1)$$

$$Re(450) < Re(550) \quad (R2)$$

The small-piece layers 220 may adjust the transmitted light in the visible wavelength range to different polarization states in accordance with the wavelength dispersion property of the small-piece layers 220. For example, when the small-piece layers 220, which can function as a 1/4 wave plate at a certain wavelength, have a reverse wavelength dispersion property, the small-piece layers 220 may impart an in-plane retardation of 1/4 wavelength to the transmitted light over the entire visible wavelength range. On the other hand, when the small-piece layers 220, which can function as a 1/4 wave plate at a certain wavelength, have a normal wavelength dispersion property, the small-piece layers 220 may impart an in-plane retardation deviating from 1/4 wavelength to the transmitted light in part of the visible wavelength range. Therefore, when the small-piece layers 220 differ in wavelength dispersion property, the polarization state of the polarized light transmitted through the small-piece layers 220 may differ. The difference in the polarization state may be utilized to adjust the color of the small-piece layers 220 and that of the display layer 200 containing the small-piece layers 220. Thus, by adjusting the color due to the difference in the wavelength dispersion property, the latitude of the color of the display layer 200 can be enhanced, and thus, it is possible to realize the display medium 10 having an advanced design.

The wavelength dispersion property of the small-piece layers 220 contained in one display layer 200 may be different from one another, and may preferably be the same.

When the small-piece layers 220 have an in-plane retardation, the small-piece layers 220 can have a direction in which the maximum refractive index is given. Hereinbelow, this direction may be referred to as an "optical axis direction". This optical axis direction may be parallel to the layer plane, perpendicular to the layer plane, or in a tilted direction which is neither parallel to nor perpendicular to the layer plane. The small-piece layers 220 and the display layer 200 including the small-piece layers 220 may adjust the polarization state of the transmitted light in various ways in accordance with the optical axis direction and the traveling direction of the transmitted light. Hence, by appropriately selecting the optical axis direction of the small-piece layers 220, the color of the display layer 200 can be changed in accordance with the observation direction with high latitude, and thus, it is possible to realize the display medium 10 having an advanced design.

When the small-piece layers 220 are formed of a liquid crystal composition or a cured material thereof, the

optical axis direction of the small-piece layers 220 can be expressed by a substantially maximum tilted angle of molecules of the liquid crystal compound contained in the small-piece layers 220. The "substantially maximum tilted angle" of the molecules of a liquid crystal compound contained in a certain layer refers to a maximum value for the tilted angle of the molecules of the liquid crystal compound in a case in which it is assumed that the tilted angle of the molecules on one surface of the layer is 0°, and that the tilted angle of the molecules varies in the thickness direction at a certain rate. The "tilted angle" of the molecules of the liquid crystal compound refers to an angle formed by the molecules of the liquid crystal compound with respect to the layer plane of the layer containing the liquid crystal compound. This tilted angle corresponds to a maximum angle among angles formed by the directions in which the maximum refractive index are given in a refractive index ellipsoid of the molecules of the liquid crystal compound with respect to the layer plane. Specifically, consider a case in which, in the thickness direction of the layer containing the liquid crystal compound, the tilted angle of the molecules of the liquid crystal compound is smaller in an area closer to a certain side of the layer and is larger in an area farther from the certain side. The substantially maximum tilted angle refers to a maximum value for the tilted angle calculated on the assumption that the rate of variation of the tilted angle in the thickness direction (that is, the rate of variation that the tilted angle is smaller in an area closer to a certain side and is larger in an area farther from the certain side) is fixed. In a specific example, in a liquid crystal cured layer obtained by curing a layer of a liquid crystal composition formed on a temporary supporting body, the substantially maximum tilted angle generally refers to a maximum value for the tilted angle of the molecules of the liquid crystal compound in a case in which it is assumed that the tilted angle of the molecules on a surface of the liquid crystal cured layer on a side provided with the temporary supporting body is 0°, and that the tilted angle of the molecules varies in the thickness direction at a certain constant rate. Generally, there is a tendency that, as a layer has a larger substantially maximum tilted angle, the overall tilted angle of the molecules of the liquid crystal compound contained in the layer is larger. Therefore, based on this substantially maximum tilted angle, it is possible to understand whether the optical axis direction of the small-piece layer 220 is parallel to, perpendicular to, or neither parallel to nor perpendicular to, the layer plane. For example, when the substantially maximum tilted angle is 0° to 4°, the optical axis direction may be parallel to the layer plane. For example, when the substantially maximum tilted angle is 86° to 90°, the optical axis direction may be perpendicular to the layer plane. For example, when the substantially maximum tilted angle is more than 4° and less than 86°, the optical axis direction may be in a direction tilted relative to the layer plane.

The optical axis directions of the small-piece layers 220 included in one display layer 200 may be different from one another, and may preferably be the same. Hence, when the small-piece layers 220 are formed of a liquid crystal composition or a cured material thereof, the substantially maximum tilted angles may be different from one another, and may preferably be the same.

When the small-piece layers 220 have an in-plane retardation, the small-piece layers 220 serving as a phase difference plate may be classified into several types depending on the relationship between the optical axis direction and the layer plane of the small-piece layers 220. The type of small-piece layers 220 serving as a phase difference plate is not particularly limited. Preferable examples of the type of small-piece layers 220 may include one or more types selected from the group consisting of a positive A plate, a positive C plate, a tilted O plate, and a tilted hybrid orientation plate. The positive A plate refers to a layer whose optical axis direction is parallel to the layer plane. The positive C plate refers to a layer whose optical axis direction is perpendicular to the layer plane. The tilted O plate refers to a layer whose optical axis direction is neither parallel to nor perpendicular to the layer plane. The tilted hybrid orientation plate refers to a layer in which the angle formed by the optical axis direction with respect to the layer plane on one side of the layer is different from that on the other side. The small-piece layers 220 of the above-mentioned preferable type and the display layer 200 including the small-piece layers 220 can adjust the polarization state of the transmitted light in various ways in accordance with the type and the traveling direction of the transmitted light. Hence, by appropriately selecting the type of small-piece layers 220, the color of the display layer 200 can be changed in accordance with the observation direction with high latitude, and thus, it is possible to realize the display medium 10 having an advanced design.

The types of the small-piece layers 220 included in one display layer 200 may be different from one another, and may preferably be the same.

The small-piece layers 220 may have a circularly polarized light separation function. The "circularly polarized light separation function" means a function of reflecting circularly polarized light having either a clockwise rotating direction or a counterclockwise rotating direction and transmitting circularly polarized light having the other rotating direction. Therefore, the small-piece layers 220 and the display layer 200 including the small-piece layers 220 may be capable of reflecting circularly polarized light having one rotating direction $D_D$ and transmitting circularly polarized light having a rotating direction opposite to the rotating direction $D_D$ in a wavelength range in which the circularly polarized light separation function can be exerted. In the following description, such a wavelength range, in which the small-piece layers 220 can exert the circularly polarized light separation function, may be appropriately referred to as a "display wavelength range". The reflectance of unpolarized light at the small-piece layers 220 in the display wavelength range is usually 35% to 50%, and preferably 40% to 50%. The small-piece layers 220 having the circularly polarized light separation function and the display layer 200 including the small-piece layers 220 can selectively reflect circularly polarized light having the

rotating direction $D_D$ in the display wavelength range and can transmit the other light. Accordingly, with use of such a function of selectively transmitting or reflecting specific circularly polarized light having a specific wavelength, the display medium 10 can achieve various types of display mode.

The rotating directions $D_D$ of circularly polarized light which can be reflected by the small-piece layers 220 included in one display layer 200 may be different from one another, and may preferably be the same.

From the viewpoint of achieving a display mode that can be visually recognized by human eyes, the display wavelength range is preferably in a visible wavelength range. The display wavelength ranges of the small-piece layers 220 included in one display layer 200 may be different from one another, and may preferably be the same.

There is no particular limitation on the material of the small-piece layers 220. Examples of the material of the small-piece layers 220 may include an inorganic material and an organic material. Examples of the inorganic material may include metal such as aluminum and silver; and a metal compound such as titanium oxide, silicon oxide, niobium oxide, tantalum oxide, and magnesium fluoride. Examples of the organic material may include an acrylic polymer, a polystyrene, a polyester, a polyamide, a polyvinyl chloride, a polyvinyl acetate, a cellulose-based polymer (for example, a triacetyl cellulose), a polycarbonate, a polyurethane, a polyolefin, an alicyclic structure-containing polymer, an epoxy resin, a melamine resin, and a phenol resin. As the materials of the small-piece layers 220, one type thereof may be solely used, and two or more types thereof may also be used in combination. When one small-piece layer 220 contains two or more types of materials, the small-piece layer 220 may have a single-layer structure containing two or more types of materials uniformly, and may have a multilayer structure including two or more layers containing one or more types of materials.

Among these, it is preferable that the small-piece layers 220 are formed of a cured product of a liquid crystal composition containing a liquid crystal compound. Using such a cured product of a liquid crystal composition, small-piece layers 220 having an in-plane retardation and small-piece layers 220 having a circularly polarized light separation function can be efficiently produced. Herein, for convenience, a material referred to as a "liquid crystal composition" encompasses not only a mixture of two or more types of substances but also a material consisting of a single substance. In addition, in the following description, a layer formed of a cured product of a liquid crystal composition may be referred to as a "liquid crystal cured layer".

For example, using a cured product obtained by curing a liquid crystal composition in a state in which a liquid crystal compound contained in the liquid crystal composition is oriented, small-piece layers 220 having an in-plane retardation can be formed. For example, a liquid crystal compound contained in a liquid crystal composition is oriented to make the phase of the liquid crystal composition into a liquid crystal phase such as a nematic phase and a smectic phase. When the liquid crystal composition in such a liquid crystal phase is cured, the orientation direction of the liquid crystal compound can be fixed. Therefore, since the liquid crystal cured layer containing the cured product obtained by the above-mentioned curing can include the liquid crystal compound oriented as described above, the liquid crystal cured layer can have an in-plane retardation corresponding to factors such as the type of liquid crystal compound, the orientation state of the liquid crystal compound, and the thickness thereof. Small-piece layers 220 having an in-plane retardation can be obtained as the thus obtained liquid crystal cured layer. The "liquid crystal compound" contained in the cured product of the liquid crystal compound described above includes not only an unreacted liquid crystal compound but also a liquid crystal compound having been subjected to a reaction such as a polymerization reaction and a crosslinking reaction.

At this time, by adjusting the orientation direction of the liquid crystal compound in the thickness direction of the liquid crystal cured layer, the type of small-piece layers 220 as the phase difference plate can be adjusted. For example, when the orientation direction of the liquid crystal compound is parallel to the layer plane, small-piece layers 220 serving as positive A plates can be obtained. In addition, for example, when the orientation direction of the liquid crystal compound is perpendicular to the layer plane, small-piece layers 220 serving as positive C plates can be obtained. Furthermore, for example, when the orientation direction of the liquid crystal compound is neither parallel to nor perpendicular to the layer plane, small-piece layers 220 serving as tilted O plates can be obtained. In addition, for example, when the liquid crystal compound is oriented in such a manner that the angle formed by the orientation direction of the liquid crystal compound with respect to the layer plane is smaller in an area closer to a certain side of the layer and is larger in an area farther from the certain side, small-piece layers 220 serving as tilted hybrid orientation plates can be obtained.

Furthermore, for example, using a cured product in which a liquid crystal composition is cured in a state in which a liquid crystal compound contained in the liquid crystal composition is oriented so as to have a cholesteric regularity, small-piece layer 220 having a circularly polarized light separation function can be formed. The cholesteric regularity is a structure in which the angle of molecular axes in stacking planes are shifted (twisted) as the planes are observed sequentially passing through the stacked planes, such that molecular axes in a certain first plane are oriented in a certain direction, molecular axes in a subsequent plane stacking on the first plane are oriented in a direction shifted by a small angle with respected to that of the first plane, and molecular axes in still another plane are oriented in a direction of a further shifted angle. That is, when molecules inside a layer have cholesteric regularity, molecular axes of

the molecules on a first plane inside the layer are aligned along a constant direction. On the subsequent second plane stacking on the first plane inside the layer, a direction of molecular axes is shifted by a slight angle from the direction of the molecular axes on the first plane. On the subsequent third plane further stacking on the second plane, a direction of molecular axes is further shifted by an angle from the direction of the molecular axes on the second plane. In this manner, on the planes disposed in a stacking manner, the angles of the molecular axes on these planes are sequentially shifted (twisted). The structure in which the directions of the molecular axes are twisted in this manner is usually a helical structure and is an optically chiral structure. Usually, a liquid crystal cured layer containing a liquid crystal compound that has a cholesteric regularity in this manner reflects circularly polarized light while maintaining its chirality.

To give a specific example, a liquid crystal compound contained in a liquid crystal composition is oriented to make a phase of the liquid crystal composition into a cholesteric phase. When the liquid crystal composition with this cholesteric phase is cured, the orientation direction of the liquid crystal compound can be fixed. Therefore, since the liquid crystal cured layer containing the cured product obtained by the above-described curing can include the liquid crystal compound oriented so as to have cholesteric regularity as described above, the liquid crystal cured layer can have a circularly polarized light separation function corresponding to factors such as the type of liquid crystal compound, the orientation state of the liquid crystal compound, and the thickness. Therefore, the small-piece layers 220 having the display wavelength range can be obtained as the liquid crystal cured layers.

The materials of the small-piece layers 220 contained in one display layer 200 may be different from one another, but are preferably the same.

[1.3. Optional layer]

The display medium 10 may further include an optional layer in combination with the substrate 100 and the display layer 200. For example, the display medium 10 may include an adhesive layer (not illustrated) between the substrate 100 and the display layer 200. When such an adhesive layer is used, efficient production of the display medium 10 is possible.

The adhesive layer is a layer for bonding the substrate 100 and the display layer 200, and can be formed by an adhesive agent. The adhesive agent may include not only an adhesive agent in a narrow sense (an adhesive agent which has a shear storage elastic modulus at 23°C of 1 MPa to 500 MPa after an energy ray irradiation or after a heat treatment) but also a tackiness agent (such as a pressure-sensitive adhesive agent) which has a shear storage elastic modulus at 23°C of less than 1 MPa. As the adhesive agent, one type thereof may be solely used, and two or more types thereof may also be used in combination.

The adhesive layer may be a transparent layer which is capable of transmitting light, and may be a non-transparent layer which does not transmit light. When the adhesive layer is transparent, the adhesive layer may have an in-plane retardation, and is preferably an optically isotropic layer which has a small in-plane retardation. For example, the in-plane retardation of the adhesive layer at a measurement wavelength of 550 nm is preferably 0 to 20 nm, more preferably 0 to 10 nm, and particularly preferably 0 to 5 nm.

Additional examples of the optional layer may include a mat layer that improves the slipperiness of the display medium 10; a hard coat layer such as an impact-resistant polymethacrylate resin layer; an antireflective layer; and an antifouling layer.

[1.4. Method for producing display medium]

A method for producing the display medium 10 according to the first embodiment of the present invention is not particularly limited, and an appropriate producing method by which the above-mentioned display medium 10 can be obtained can be employed. From the viewpoint of producing the display medium 10 efficiently, the display medium 10 is preferably produced by a producing method including

a step (A) of preparing a primary member including a temporary supporting body and a transfer material layer formed on the temporary supporting body and including the small-piece layers 220,
a step (B) of forming on the substrate 100 an adhesive layer with the same shape as that of the display layer 200 as viewed in the thickness direction,
a step (C) of attaching the transfer material layer and the adhesive layer to each other, and
a step (D) of detaching the temporary supporting body.

Hereinbelow, the preferable producing method will be described with reference to the drawings. FIG. 5 is a schematic plan view of a primary member 300 prepared in the method for producing the display medium 10 according to the first embodiment of the present invention, as viewed in the thickness direction. FIG. 6 is a cross-sectional view schematically illustrating a cross section, taken along VI-VI plane illustrated in FIG. 5, of the primary member 300

prepared in the method for producing the display medium 10 according to the first embodiment of the present invention. FIG. 7 is an enlarged plan view schematically illustrating a VII area, illustrated in FIG. 5, of the primary member 300 prepared in the method for producing the display medium 10 according to the first embodiment of the present invention in an enlarged manner.

As illustrated in FIGS. 5 and 6, in the step (A), the primary member 300 including a temporary supporting body 310 and a transfer material layer 320 formed on the temporary supporting body 310 is prepared.

Examples of the temporary supporting body 310 may include a plate, a sheet, and a film, formed of an appropriate material. From the viewpoint of efficiently producing the display medium 10, the temporary supporting body 310 preferably has a long-length shape.

Examples of the material for the temporary supporting body 310 may include a resin. Examples of the resin may include the same resins as those given as examples of the material for the substrate 100. Among these, a resin containing an alicyclic structure-containing polymer is preferable.

The temporary supporting body 310 may be subjected to a stretching treatment or does not have to be subjected to the stretching treatment. The surface of the temporary supporting body 310 may be subjected to a surface treatment such as a rubbing treatment.

The temporary supporting body 310 may have a single layer structure including only one layer or a multilayer structure including two or more layers. For example, the temporary supporting body 310 may include a resin film layer formed of the above-mentioned resin and an oriented film formed on this resin film layer. When using such a temporary supporting body 310 including the oriented film, the liquid crystal compound contained in the liquid crystal composition layer formed on the oriented film can be oriented in a favorable manner. The oriented film can be formed of a resin containing a polymer such as a polyimide, a polyvinyl alcohol, a polyester, a polyarylate, a polyamide-imide, a polyetherimide, and a polyamide.

The thickness of the temporary supporting body 310 is preferably 12 μm or more, more preferably 25 μm or more, and still more preferably 50 μm or more, and is preferably 250 μm or less, more preferably 200 μm or less, and still more preferably 188 μm or less.

As illustrated in FIG. 7, the transfer material layer 320 is a layer including small-piece layers 330, which are the same as the small-piece layers 220 included in the display medium 10. Specifically, the transfer material layer 320 includes a plurality of small-piece layers 330 sectioned by a split 340, and the small-piece layers 330 are the same as the small-piece layers 220 included in the display medium 10. Therefore, the respective small-piece layers 330 are provided at different positions of a surface 310U of the temporary supporting body 310 and are divided by the splits 340. The splits 340 are formed in the entire thickness of the transfer material layer 320 and are formed between the small-piece layers 330. A group of the plurality of assembled small-piece layers 330 forms the transfer material layer 320.

Since the small-piece layers 330 included in the transfer material layer 320 are the same as the small-piece layers 220 included in the display medium 10, the small-piece layers 330 are usually formed of the same material as that for the small-piece layers 220 included in the display medium 10. In addition, the small-piece layers 330 included in the transfer material layer 320 usually have the same array direction, shape as viewed in the thickness direction, size, and properties (such as an in-plane retardation, a wavelength dispersion property, a type as a phase difference plate, and a circularly polarized light separation function) as those of the small-piece layers 220 included in the display medium 10.

Since the small-piece layers 330 included in the transfer material layer 320 are the same as the small-piece layers 220 included in the display medium 10, the split 340 sectioning the small-piece layers 330 usually has the same shape as viewed in the thickness direction, size, and pitch as those of the split 210 sectioning the small-piece layers 220. Furthermore, the split 340 sectioning the small-piece layers 330 usually includes split lines 341 and 342 extending in two or more directions, and the extending direction, shape as viewed in the thickness direction, size, and pitch of each of the split lines 341 and 342 are the same as those of each of the split lines 211 and 212 included in the split 210 sectioning the small-piece layers 220.

The transfer material layer 320 does not have to be formed in the same shape as that of the display layer 200 as viewed in the thickness direction. The transfer material layer 320 is usually formed to be larger than the display layer 200. Specifically, the transfer material layer 320 is usually formed to be as large as to be able to cover the display layer 200. In the present embodiment, as illustrated in FIG. 5 and FIG. 6 ,an example will be described in which the transfer material layer 320 is formed on a large part of the surface 310U of the temporary supporting body 310, which is larger than the display layer 200.

The transfer material layer 320 is usually disposed on the outermost side of the primary member 300. Being disposed on the outermost side means that the transfer material layer 320 is disposed on the outermost side of the primary member 300 in the thickness direction. Hence, a surface 320U of the transfer material layer 320 may be exposed on one side of the primary member 300. The primary member 300 may include an optional layer between the temporary supporting body 310 and the transfer material layer 320.

The above-mentioned primary member 300 can be produced, for example, by a producing method including

forming a layer on the temporary supporting body 310 with use of a material for the small-piece layers 330 and forming the split 340 in the formed layer. In the following description, the layer formed of a material for the small-piece layers 330 before being provided with the split 340 may be referred to as a "material layer". This material layer is usually a layer formed of the same material as those for the small-piece layers 220 and 330 to be as thick as the small-piece layers 220 and 330. The material layer may have the same optical property (for example, in-plane retardation and a circularly polarized light separation function) as those of the small-piece layers 220 and 330.

The method for forming the material layer is not limited. For example, when the material layer is formed of a cured material of a liquid crystal composition, the material layer serving as a liquid crystal cured layer can be obtained by forming a layer of a liquid crystal composition on the temporary supporting body 310, orienting the liquid crystal compound contained in the liquid crystal composition as needed, and then curing the liquid crystal composition. For example, when a material layer having an in-plane retardation is to be formed, methods described in International Publication No. 2014/069515, International Publication No. 2015/064581, International Publication No. 2019/163611, International Publication No. 2019/146468, and the like can be employed. For example, when a material layer having a circularly polarized light separation function is to be formed, a method described in Japanese Patent Application Laid-Open No. 2014-174471 A can be employed. By forming the material layer on the temporary supporting body 310, a multilayer member including the temporary supporting body 310 and the material layer can be obtained.

FIG. 8 is a cross-sectional view schematically illustrating a cross section, taken along a VIII-VIII plane illustrated in FIG. 7, of the primary member 300 prepared in the method for producing the display medium 10 according to the first embodiment of the present invention. By forming the split 340 in the material layer of the multilayer member (not illustrated), the primary member 300 including the transfer material layer 320 including the small-piece layers 330 is obtained as illustrated in FIG. 8. The split 340 is usually formed in the entirety of the material layer in the thickness direction and sections the entirety of the small-piece layers 330 in the thickness direction.

Furthermore, the split 340 is preferably formed more deeply than a thickness $T_{330}$ of the small-piece layers 330. In particular, the split 340 is preferably formed more deeply than the thickness $T_{330}$ of the small-piece layers 330 on the entire surface of the primary member 300. In this case, a tip end 340C of the split 340 reaches a deeper location than the surface 310U of the temporary supporting body 310 on the side provided with the small-piece layers 330. The depth $T_{340}$ of the split 340 is larger than the thickness $T_{330}$ of the small-piece layers 330. When the split 340 is deep in this manner, the shape uniformity of the small-piece layers 330 sectioned by the split 340 can be made favorable.

However, the depth $T_{340}$ of the split 340 is preferably set so as not to completely cut the temporary supporting body 310. Therefore, the depth $T_{340}$ of the split 340 is preferably larger than the thickness $T_{330}$ of the small-piece layers 330 and smaller than a thickness $T_{300}$ of the primary member 300.

The split 340 may be formed, for example, by pressing a processing tool, which has a concavo-convex shape, on the side of the multilayer member provided with the material layer. Preferably, the split 340 is formed by supporting the multilayer member with use of a supporting tool and pressing against the multilayer member between the supporting tool and the processing tool in the supporting state.

As the processing tool, a member having on the surface thereof a convex portion corresponding to the shape of the split 340 as viewed in the thickness direction of the multilayer member may be used. For example, when the shape of the split as viewed in the thickness direction of the multilayer member is a grid shape, a member having on the surface thereof a grid-shape convex portion may be used.

Only one processing tool may be used, or two or more processing tools may be used in combination. For example, a processing tool having on the surface thereof a convex portion corresponding to one part of the split 340 and a processing tool having on the surface thereof a convex portion corresponding to the other part of the split 340 may be used in combination. When the split including the split lines 341 and 342 extending in different directions is to be formed as in the example illustrated in the present embodiment, the split 340 may be formed by pressing on the multilayer member a first processing tool having on the surface thereof a convex portion corresponding to the split lines 341 extending in one direction and a second processing tool having on the surface thereof a convex portion corresponding to the split lines 342 extending in the other direction.

The split 340 may be formed by pressing the same processing tool a plurality of times on the multilayer member in different layouts.

The split may be formed continuously on the multilayer member with use of a cylindrical processing tool.

As the material for the processing tool, a material that has sufficient strength not to cause breakage during pressing the multilayer member and that can form a concavo-convex structure can be employed. Examples of such a material may include carbon steel and stainless steel. From the viewpoint of improving corrosion resistance, strength, and heat conductivity, the processing tool may have on the surface thereof a film including one layer or two or more layers. Examples of such a film may include a plating film made of nickel, nickel-phosphorus, silicon, or copper; and a film formed by ceramic spraying. The processing tool may further be provided with a heating device with use of a heater, a heating medium, dielectric heating, induction heating, or the like; a charge neutralizer for static electricity elimination; an earth; and the like. Such a processing tool can be produced, for example, by forming a concavo-convex shape on a

cylindrical metal roll by cutting with use of a cutting tool such as a diamond bite or processing with use of a laser processing device.

The pressure when the processing tool is pressed against the side of the multilayer member provided with the material layer is preferably 0.5 MPa or more, more preferably 1 MPa or more, and still more preferably 5 MPa or more, and is preferably 100 MPa or less, and more preferably 75 MPa or less. When the pressure is the lower limit value or more, the split 340 having a sufficient depth can be formed. When the pressure is the upper limit value or less, breakage of the primary member 300 can be suppressed. When a single processing tool or different processing tools are pressed against the multilayer member a plurality of times to form the split 340, the plural-time pressing operations may be performed at the same pressure value or at different pressure values. Preferably, the plural-time pressing operations are performed at the same pressure value.

The supporting tool usually includes a supporting surface that can support the surface included in the multilayer member on the opposite side of the side provided with the material layer. The hardness of the supporting surface of the supporting tool is preferably D40 or more, more preferably D60 or more, and still more preferably D70 or more, and is preferably D99 or less, more preferably D97 or less, and still more preferably D95 or less. Herein, the hardness represents a value measured by a durometer (Type D) in accordance with JIS K-6253. When the hardness of the supporting surface of the supporting tool is in the above-mentioned range, the split having an appropriate depth can be formed easily. Examples of the material for the surface of the supporting tool may include a rubber and a resin.

Hereinbelow, an example of a method for forming the split 340 using the processing tool will be described with reference to the drawings.

FIG. 9 is a perspective view schematically illustrating an example of a processing tool 400 that can be used in a method for producing the primary member 300 in the method for producing the display medium 10 according to the first embodiment of the present invention. FIG. 10 is a perspective view schematically illustrating the processing tool 400 illustrated in FIG. 9. FIG. 11 is a plan view schematically illustrating a state in which the processing tool 400 in FIG. 10 is cut along line XI-XI and developed. FIG. 12 is a partial cross-sectional view schematically illustrating a cross section of a part of the proximity of the surface of the processing tool 400 cut along a plane perpendicular to a direction in which a convex portion 410 extends.

As illustrated in FIG. 9, the processing tool 400 is disposed so as to come into contact with a surface 360U of a multilayer member 350 on the side provided with a material layer 360 so that the processing tool 400 can press the multilayer member 350. As illustrated in FIG. 10, the processing tool 400 is formed in a cylindrical shape and provided to be rotatable. On the outside surface (a surface that is to be in contact with the multilayer member 350) of the processing tool 400, a concavo-convex shape is formed. The concavo-convex shape includes the convex portion 410 and a concave portion 420 extending in a direction that forms an angle $\theta x$ with respect to a certain reference direction L1 as illustrated in FIG. 11. Herein, an example is given in which, as the above-mentioned reference direction L1, the axial direction of the processing tool 400, which is perpendicular to the conveyance direction of the multilayer member 350, is employed. The convex portion 410 and the concave portion 420 of the processing tool 400 are repetitively formed alternately in a direction perpendicular to the direction in which the convex portion 410 extends. The angle $\theta x$ is not particularly limited, and herein, an example in which the angle $\theta x$ is 45° is given. As illustrated in FIG. 11, the concavo-convex shape of the processing tool 400 is a shape in which straight lines are arrayed as viewed from above the drawing sheet. As illustrated in FIG. 12, a pitch $P_{410}$ between the two adjacent convex portions 410 is preferably set in an appropriate manner. In FIGS. 10 and 11, reference signs 430 and 440 represent ends of the processing tool 400.

As illustrated in FIG. 12, the convex portion 410 may be formed in a mountain shape whose cross section has an acute-angled top 410T. A top angle $\theta_{410}$ of the convex portion 410 is preferably small. The top angle $\theta_{410}$ may be, for example, 10° or more, 20° or more, or 30° or more, and for example, 90° or less, 80° or less, 70° or less, or 60° or less. The shape of the top of the convex portion 410 may have a round shape or a chamfered shape as long as the split 340 can be formed in the material layer 360.

As illustrated in FIG. 9, a supporting tool 450 having a cylindrical shape is rotatably provided to be opposed with respect to the processing tool 400. The supporting tool 450 is provided to be able to press the surface of the multilayer member 350 on the side provided with the temporary supporting body 310. Therefore, the multilayer member 350 is pressed between the supporting tool 450 and the processing tool 400.

FIG. 13 is a perspective view schematically illustrating an example of a processing tool 500 that may be used in the method for producing the primary member 300 in the method for producing the display medium 10 according to the first embodiment of the present invention. FIG. 14 is a perspective view schematically illustrating the processing tool 500 illustrated in FIG. 13. FIG. 15 is a plan view schematically illustrating a state in which the processing tool 500 in FIG. 14 is cut along line XV-XV and developed.

As illustrated in FIGS. 13 to 15, the processing tool 500 is disposed so as to come into contact with the surface 360U of the multilayer member 350 on the side provided with the material layer 360 so that the processing tool 500 can press the multilayer member 350. The processing tool 500 is provided in the same manner as that of the processing tool 400 except that the direction in which a convex portion 510 and a concave portion 520 extend is different from those

in the processing tool 400. The processing tool 500 includes the convex portion 510 and the concave portion 520, and an angle θy between each of the convex portion 510 and the concave portion 520 and a reference direction L2 is different from the angle θx of the processing tool 400. Herein, an example is given in which, as the above-mentioned reference direction L2, the axial direction of the processing tool 500, which is perpendicular to the conveyance direction of the multilayer member 350, is employed. The angle θy is not particularly limited, and herein, an example in which the angle θy is 135° is given. As illustrated in FIG. 15, the concavo-convex shape of the processing tool 500 is a shape in which straight lines are arrayed in a direction intersecting with the direction in which the convex portion 410 and the concave portion 420 of the processing tool 400 extend as viewed from above the drawing sheet. In FIGS. 14 and 15, reference signs 530 and 540 represent ends of the processing tool 500.

As illustrated in FIG. 13, a supporting tool 550 having a cylindrical shape is rotatably provided to be opposed with respect to the processing tool 500. The supporting tool 550 is provided to be able to press the surface of the multilayer member 350 on the side provided with the temporary supporting body 310. Therefore, the multilayer member 350 is pressed between the supporting tool 550 and the processing tool 500.

When the split 340 is formed in the material layer 360 of the multilayer member 350 using the above-mentioned processing tools 400 and 500 and supporting tools 450 and 550, a step of forming one set of the split lines 341 using one set of the processing tool 400 and the supporting tool 450 and a step of forming the other set of the split lines 342 using the other set of the processing tool 500 and the supporting tool 550 are performed.

In the step of using the processing tool 400 and the supporting tool 450, the multilayer member 350 is caused to pass between the processing tool 400 and the supporting tool 450 to bring the convex portions 410 of the processing tool 400 into contact with the material layer 360 as illustrated in FIG. 9. Subsequently, in this state, the multilayer member 350 is pressed between the processing tool 400 and the supporting tool 450 to insert the convex portions 410 of the processing tool 400 into the material layer 360, and the split lines 341 reflecting the shapes of the convex portions 410 can thus be formed. When the degree of pressing is adjusted so that the convex portions 410 of the processing tool 400 are inserted into the temporary supporting body 310, the split lines 341 are formed more deeply than the thickness $T_{330}$ of the small-piece layers 330 to reach a deeper location than the surface 310U of the temporary supporting body 310 on the side provided with the small-piece layers 330 (refer to FIG. 8).

In the step of using the processing tool 500 and the supporting tool 550, the multilayer member 350 is caused to pass between the processing tool 500 and the supporting tool 550 to bring the convex portions 510 of the processing tool 500 into contact with the material layer 360 as illustrated in FIG. 13. Subsequently, in this state, the multilayer member 350 is pressed between the processing tool 500 and the supporting tool 550 to insert the convex portions 510 of the processing tool 500 into the material layer 360, and the split lines 342 reflecting the shapes of the convex portions 510 can thus be formed. When the degree of pressing is adjusted so that the convex portions 510 of the processing tool 500 are inserted into the temporary supporting body 310, the split lines 342 are formed more deeply than the thickness $T_{330}$ of the small-piece layers 330 to reach a deeper location than the surface 310U of the temporary supporting body 310 on the side provided with the small-piece layers 330 (refer to FIG. 8).

Consequently, by the above-mentioned method including the step of forming the split lines 341 and the step of forming the split lines 342, the split 340 including the split lines 341 and the split lines 342 can be formed in the material layer 360, and the primary member 300 can thus be obtained. The order of the formation of the split lines 341 by the processing tool 400 and the formation of the split lines 342 by the processing tool 500 is not particularly limited. For example, the multilayer member 350 may be pressed by the processing tool 400 and then be pressed by the processing tool 500. Alternatively, the multilayer member 350 may be pressed by the processing tool 500 and then be pressed by the processing tool 400.

In the step (B), an adhesive layer with the same shape as that of the display layer 200 as viewed in the thickness direction is formed on the substrate 100. The adhesive layer formed in this manner can function as a latent image of the display layer 200. The method for forming the adhesive layer is not particularly limited. For example, when a liquid adhesive agent is used, the adhesive agent may be applied onto the substrate to form the adhesive layer. Preferable examples of the applying method may include a printing method such as a screen printing method and an inkjet printing method. For example, when a film-shape or sheet-shape adhesive agent is used, the adhesive agent may be processed to have an appropriate shape, and the processed adhesive agent may be attached to the substrate. Examples of the processing method may include cutting and punching. Among these, a printing method is preferable from the viewpoint of suppressing production cost.

After the above-mentioned step (A) and step (B), the step (C) of attaching the transfer material layer 320 of the primary member 300 and the adhesive layer formed on the substrate 100 to each other is performed. The attaching process is usually performed by pressing the primary member 300 and the substrate 100 by a pressing tool such as a nip roll in a state where the surface of the primary member 300 on the side provided with the transfer material layer 320 and the surface of the substrate 100 on the side provided with the adhesive layer are opposed to each other. As a result, in an area provided with the adhesive layer, the substrate 100 and the transfer material layer 320 are attached to each other via the adhesive layer.

After the above-mentioned step (C), the step (D) of detaching the temporary supporting body 310 is performed. When the temporary supporting body 310 is detached, in the area where the adhesive layer is formed on the substrate 100, the transfer material layer 320 is separated from the temporary supporting body 310 and remains on the substrate 100. Hence, the portion of the transfer material layer 320 remaining on the substrate 100 forms the display layer 200. The display layer 200 includes a group of the small-piece layers 220 serving as a part of the multiple small-piece layers 330 included in the transfer material layer 320. Hence, the group of the small-piece layers 220 forms the display layer 200. On the other hand, in the area where the adhesive layer are not formed on the substrate 100, the transfer material layer 320 cannot be separated from the temporary supporting body 310. Hence, since the transfer material layer 320 is detached together with the temporary supporting body 310, no small-piece layers 330 remain in the area where the adhesive layer are not formed on the substrate 100. Accordingly, the display layer 200 with the shape of the adhesive layer as viewed in the thickness direction can be formed on the substrate 100, and the display medium 10 can thus be obtained.

In the above-mentioned method for producing the display medium 10, the order of the step (A), the step (B), the step (C), and the step (D) is not limited as long as the display medium 10 is obtained.

The above-mentioned method for producing the display medium 10 is preferably performed using the long-length substrate 100 and the long-length primary member 300. In this case, with use of a roll-to-roll method, the display medium 10 can be produced with high productivity.

The above-mentioned method for producing the display medium 10 may further include an optional step in combination with the step (A), the step (B), the step (C), and the step (D).

For example, when a curable adhesive agent is used, the above-mentioned method for producing the display medium 10 may include a step of curing the adhesive agent. Curing of the adhesive agent is usually performed after the step (C) and before the step (D).

Furthermore, when the long-length substrate 100 and the long-length primary member 300 are used, a long-length display medium 10 is usually obtained. Thus, the above-mentioned method for producing the display medium 10 may include a step of trimming the long-length display medium 10 into an appropriate shape.

[1.5. Main effect of display medium]

The above-mentioned display medium 10 can achieve various types of display mode by the display layer 200.

For example, since the display layer 200 can be formed to have various colors and shapes, the display layer 200 can allow an observer who observes the display medium 10 to visually recognize various types of image. Accordingly, the display medium 10 can contribute to enhancement of the latitude of the display mode.

In particular, since the display layer 200 including the small-piece layers 220 having an in-plane retardation is generally transparent, the display layer 200 can be difficult to visually recognize when observed with the naked eye. However, when the display medium 10 is disposed between two linear polarizing plates disposed in a crossed Nicols layout or a parallel Nicols layout and is observed transmissively, the display layer 200 can be visually recognized depending on the angle at which the display medium 10 is disposed. Therefore, the above-mentioned display layer 200 can contribute to achievement of various types of display mode depending on the observation method. The "crossed Nicols layout" represents a layout in which the absorption axes of the two linear polarizing plates are orthogonal to each other as viewed in the thickness direction. The "parallel Nicols layout" represents a layout in which the absorption axes of the two linear polarizing plates are parallel as viewed in the thickness direction.

In particular, when the display layer 200 including the small-piece layers 220 having a circularly polarized light separation function is observed with the naked eye under unpolarized light, the display layer 200 can be visually recognized. Furthermore, when the display layer 200 is observed through a circular polarizing plate that can transmit circularly polarized light that the small-piece layers 220 can reflect, the display layer 200 can be visually recognized. However, when the display layer 200 is observed through a circular polarizing plate that does not transmit circularly polarized light that the small-piece layers 220 can reflect, the display layer 200 can be difficult to visually recognize. When the display layer 200 is observed while the display layer 200 is irradiated with only circularly polarized light that the small-piece layers 220 cannot reflect, the display layer 200 can be difficult to visually recognize. Therefore, the above-mentioned display layer 200 can contribute to achievement of various types of display mode depending on the observation method. In particular, since the display layer 200 including the small-piece layers 220 having a circularly polarized light separation function can reflect circularly polarized light of a color corresponding to the display wavelength range of the small-piece layers 220, the display layer 200 can be displayed with the color corresponding to the display wavelength range. Accordingly, the display medium 10 can effectively contribute to enhancement of the latitude of the display mode.

Furthermore, in the above-mentioned display medium 10, the display layer 200 can be visually recognized even without being magnified by a loupe or a microscope during observation. However, since the small-piece layer 220 included in the display layer 200 is small, the small-piece layer 220 is difficult to visually recognize without being magnified during observation, and the shape, size, and layout of the small-piece layer 220 are highly difficult to recognize. In

particular, the small-piece layer 220 having the width in the above-mentioned specified range is difficult to visually recognize unless a high-magnification microscope is used, and it is highly difficult for an observer to find the fact itself that the small-piece layer 220 is included in the display layer 200. Accordingly, the above-mentioned display medium 10 can increase the difficulty of counterfeiting while contributing to achievement of various types of display mode by the display layer 200.

The small-piece layers 220 included in the display medium 10 are provided to be arrayed in two or more directions in one display layer 200. The disposing regularity of the small-piece layers 220 provided to be arrayed in two or more directions in this manner is high. By disposing the small-piece layers 220 with high regularity, the display medium 10 is highly difficult to produce. Accordingly, the above-mentioned display medium 10 can increase the difficulty of counterfeiting.

The above-mentioned display medium 10 can efficiently be produced by the roll-to-roll method. Hence, the above-mentioned display medium 10 can be produced inexpensively, which can provide commercial advantages.

[2. Second embodiment]

In the first embodiment, the display medium 10 including the transparent substrate 100 has been described as an example, and a display medium may include a non-transparent substrate. For example, a display medium may include a substrate including a colored layer. An embodiment of a display medium including a colored layer will be described below.

FIG. 16 is a schematic plan view of a display medium 20 according to a second embodiment of the present invention as viewed in the thickness direction. FIG. 17 is a cross-sectional view schematically illustrating a cross section, taken along XVII-XVII plane illustrated in FIG. 16, of the display medium 20 according to the second embodiment of the present invention. FIG. 18 is an enlarged plan view schematically illustrating a XVIII area, illustrated in FIG. 16, of the display medium 20 according to the second embodiment of the present invention in an enlarged manner. In the second embodiment, the same elements as those described in the first embodiment are denoted by the same reference signs as those used in the first embodiment.

As illustrated in FIGS. 16 to 18, the display medium 20 according to the second embodiment of the present invention is provided in the same manner as the display medium 10 according to the first embodiment, except that a non-transparent substrate 600 is provided instead of the transparent substrate 100. Thus, the display medium 20 includes the substrate 600 and a display layer 200 formed on the substrate 600. The display layer 200 includes a plurality of small-piece layers 220 formed with high regularity.

The substrate 600 includes a colored layer 610 in combination with a support layer 110. Since the colored layer 610 does not transmit light in part or all of the visible wavelength range, the substrate 600 is non-transparent. In the present embodiment, an example will be described in which the substrate 600 includes the support layer 110 and the colored layer 610 in this order from the side provided with the display layer 200. However, the substrate 600 may include the colored layer 610 and the support layer 110 in this order from the side provided with the display layer 200. Alternatively, the substrate 600 may be provided so that the colored layer 610 itself can support the display layer 200 while omitting the support layer 110.

The colored layer 610 can be formed of a material capable of blocking part or all of light in the visible wavelength range. Examples of the material of the colored layer 610 may include a resin containing a colorant such as a pigment and a dye; paper; leather; cloth; wood; metal; and a metal compound. As these materials, one type thereof may be solely used, and two or more types thereof may also be used in combination.

With the display medium 20 according to the second embodiment of the present invention, the same advantages as those with the display medium 10 described in the first embodiment can be obtained. Furthermore, with the colored layer 610, various designs can be expressed by the substrate 600 itself including the colored layer 610. Therefore, it is possible to effectively contribute to enhancement of the latitude of the display mode. In addition, since the colored layer 610 can block part or all of the light transmitted through the substrate 600, it is possible to improve the visibility of the display layer 200. Even if the visibility of the display layer 200 is improved in this manner, it is difficult for the small-piece layer 220 to be visually recognized without magnifying observation. Therefore, with the display medium 20, it is possible to increase the difficulty of counterfeiting.

[3. Third embodiment]

The substrate included in the display medium may have a circularly polarized light separation function. The substrate having a circularly polarized light separation function as described above usually includes a selective reflection layer having a circularly polarized light separation function. An embodiment of a display medium including a selective reflection layer will be described below.

FIG. 19 is a schematic plan view of a display medium 30 according to the third embodiment of the present invention as viewed in the thickness direction. FIG. 20 is a cross-sectional view schematically illustrating a cross section,

taken along XX-XX plane illustrated in FIG. 19, of the display medium 30 according to the third embodiment of the present invention. FIG. 21 is an enlarged plan view schematically illustrating a XXI area, illustrated in FIG. 19, of the display medium 30 according to the third embodiment of the present invention in an enlarged manner. In the third embodiment, the same elements as those described in the first embodiment are denoted by the same reference signs as those used in the first embodiment.

As illustrated in FIGS. 19 to 21, the display medium 30 according to the third embodiment of the present invention is provided in the same manner as the display medium 10 according to the first embodiment, except that a substrate 700 having a circularly polarized light separation function is provided instead of the substrate 100. Thus, the display medium 30 includes the substrate 700 and a display layer 200 formed on the substrate 700. The display layer 200 includes a plurality of small-piece layers 220 formed with high regularity.

The substrate 700 includes a selective reflection layer 710 in combination with a support layer 110. Since the selective reflection layer 710 has a circularly polarized light separation function, the substrate 700 can acquire a circularly polarized light separation function. In the present embodiment, an example will be described in which the substrate 700 includes the selective reflection layer 710 and the support layer 110 in this order from the side provided with the display layer 200. However, the substrate 700 may include the support layer 110 and the selective reflection layer 710 in this order from the side provided with the display layer 200. Alternatively, the substrate 700 may be provided so that the selective reflection layer 710 itself can support the display layer 200 while omitting the support layer 110.

Since the selective reflection layer 710 has a circularly polarized light separation function, the selective reflection layer 710 can reflect the circularly polarized light having one rotating direction $D_S$, and can transmit the circularly polarized light having the rotating direction opposite to the rotating direction $D_S$, in a wavelength range in which the circularly polarized light separation function can be exerted. In the following description, such a wavelength range, in which the selective reflection layer 710 can exert the circularly polarized light separation function, may be appropriately referred to as a "substrate reflection range". The reflectance of unpolarized light at the selective reflection layer 710 in the substrate reflection range is usually 35% to 50%, and preferably 40% to 50%.

When the small-piece layers 220 included in the display layer 200 have the circularly polarized light separation function, the rotating direction $D_S$ of the circularly polarized light which can be reflected by the selective reflection layer 710 may be the same as, or opposite to, the rotating direction $D_D$ of the circularly polarized light which can be reflected by the small-piece layers 220.

The wavelength width of the substrate reflection range of the selective reflection layer 710 is preferably wide. The specific wavelength width of the substrate reflection range is preferably 70 nm or more, more preferably 100 nm or more, still more preferably 200 nm or more, and particularly preferably 400 nm or more. When the wavelength width of the substrate reflection range is wide, a wide range of colors of circularly polarized light can be reflected by the selective reflection layer 710. Since such a selective reflection layer 710 can be visually recognized in a color having a low saturation, when the display layer 200 with a color having a high saturation is formed, the visibility of the display layer 200 can be improved. The upper limit of the wavelength width of the substrate reflection range is not particularly limited, and may be, for example, 600 nm or less.

When the small-piece layers 220 included in the display layer 200 have a circularly polarized light separation function, the substrate reflection range of the selective reflection layer 710 may or may not overlap with the display wavelength range of the small-piece layers 220 included in the display layer 200. When overlapping, a part of the substrate reflection range and a part of the display wavelength range may overlap with each other, a part of the substrate reflection range and the entire display wavelength range may overlap with each other, the entire substrate reflection range and a part of the display wavelength range may overlap with each other, and the entire substrate reflection range and the entire display wavelength range may overlap with each other. Among these, it is preferable that a part of the substrate reflection range overlaps with the entire display wavelength range so that the display wavelength range is included in the substrate reflection range. In this case, it is possible to improve the visibility of the display layer 200 under circularly polarized light while reducing the visibility of the display layer 200 under unpolarized light. For example, assume a case in which the rotating direction $D_S$ of circularly polarized light which can be reflected by the selective reflection layer 710 and the rotating direction $D_D$ of circularly polarized light which can be reflected by the small-piece layers 220 included in the display layer 200 are opposite to each other. In this case, when a surface of the display medium 30 on the side provided with the display layer 200 is irradiated with unpolarized light, both the selective reflection layer 710 and the display layer 200 reflect circularly polarized light. At this time, when the display wavelength range is included in the substrate reflection range, both areas in which the display layer 200 is present or not can be visually recognized by the color of the selective reflection layer 710. Therefore, the visibility of the display layer 200 is low for an observer who has observed the surface of the display medium 30 on the side provided with the display layer 200. However, when the display medium 30 is irradiated with circularly polarized light having the rotating direction $D_D$, the selective reflection layer 710 does not reflect circularly polarized light, but the display layer 200 reflects circularly polarized light. Therefore, the observer who has observed the surface of the display medium 30 on the side provided with the display layer 200 can clearly visually recognize the circularly polarized light that has been reflected by the display layer 200, and thus, it

is possible to improve the visibility of the display layer 200.

When the small-piece layers 220 included in the display layer 200 have a circularly polarized light separation function, it is preferable that the wavelength width of the substrate reflection range of the selective reflection layer 710 is wider than the wavelength width of the display wavelength range of the small-piece layers 220. In this case, since the substrate reflection range can include the display wavelength range, it is possible to improve the visibility of the display layer 200 under circularly polarized light while reducing the visibility of the display layer 200 under unpolarized light.

The substrate reflection range of the selective reflection layer 710 preferably includes the entire visible wavelength range. Therefore, the lower limit of the substrate reflection range is preferably 400 nm or shorter, and the upper limit of the substrate reflection range is preferably 780 nm or longer.

With the display medium 30 according to the third embodiment of the present invention, the same advantages as those with the display medium 10 described in the first embodiment can be obtained. Furthermore, with the selective reflection layer 710, various designs can be expressed by the substrate 700 itself including the selective reflection layer 710. Therefore, it is possible to effectively contribute to enhancement of the latitude of the display mode. In addition, with the selective reflection layer 710, it is possible to selectively reflect circularly polarized light, in the substrate reflection range, having a particular rotating direction $D_S$ when the substrate 700 is irradiated with light. Therefore, when the display layer 200 includes the small-piece layers 220 having an in-plane retardation, the display layer 200 can adjust the polarization state of the circularly polarized light to realize various display modes.

For example, assume a case in which the display medium 30 is irradiated with unpolarized light when the small-piece layers 220 included in the display layer 200 have an in-plane retardation that allows the small-piece layers 220 to be capable of functioning as a 1/4 wave plate. In this case, it is difficult for an observer who has observed the display medium 30 with the naked eye to visually recognize the display layer 200. However, an observer who has observed the surface of the display medium 30 on the side provided with the display layer 200 through the linear polarizing plate can visually recognize the display layer 200 when the angle formed by the absorption axis of the linear polarizing plate and the slow axis of the small-piece layers 220 included in the display layer 200 is appropriate.

Furthermore, for example, assume a case in which the surface of the display medium 30 on the side provided with the display layer 200 is irradiated with circularly polarized light when the small-piece layers 220 included in the display layer 200 have an in-plane retardation that allows the small-piece layers 220 to be capable of functioning as a 1/4 wave plate.

When the rotating direction of the circularly polarized light that illuminates the display medium 30 is the same as the rotating direction $D_S$ of the circularly polarized light which can be reflected by the selective reflection layer 710, the selective reflection layer 710 can reflect the circularly polarized light with high intensity in areas where the display layer 200 is not provided. However, in the area where the display layer 200 is provided, circularly polarized light is converted to linearly polarized light by the display layer 200, so the selective reflection layer 710 can only reflect the linearly polarized light with weak intensity. Therefore, the display layer 200 can be visually recognized as a portion in which reflection is weaker than that of the surroundings.

On the other hand, when the rotating direction of the circularly polarized light that illuminates the display medium 30 is opposite to the rotating direction $D_S$ of the circularly polarized light which can be reflected by the selective reflection layer 710, the selective reflection layer 710 cannot reflect the circularly polarized light in areas where the display layer 200 is not provided. However, in the area where the display layer 200 is provided, circularly polarized light is converted to linearly polarized light by the display layer 200, and the selective reflection layer 710 can reflect the resulting linearly polarized light. Therefore, the display layer 200 can be visually recognized as a portion in which reflection is stronger than that of the surroundings.

For example, assume a case in which the display medium 30 is irradiated with unpolarized light when the small-piece layers 220 included in the display layer 200 have an in-plane retardation that allows the small-piece layers 220 to be capable of functioning as a 1/2 wave plate. In this case, it is difficult for an observer who has observed the display medium 30 with the naked eye to visually recognize the display layer 200. However, an observer who has observed the surface of the display medium 30 on the side provided with the display layer 200 through an appropriate circular polarizing plate can visually recognize the display layer 200.

Furthermore, for example, assume a case in which the surface of the display medium 30 on the side provided with the display layer 200 is irradiated with circularly polarized light when the small-piece layers 220 included in the display layer 200 have an in-plane retardation that allows the small-piece layers 220 to be capable of functioning as a 1/2 wave plate.

When the rotating direction of the circularly polarized light that illuminates the display medium 30 is the same as the rotating direction $D_S$ of the circularly polarized light which can be reflected by the selective reflection layer 710, the selective reflection layer 710 can reflect the circularly polarized light in areas where the display layer 200 is not provided. However, in the area where the display layer 200 is provided, the rotating direction of the circularly polarized light is reversed by passing through the display layer 200, and the selective reflection layer 710 cannot reflect the circularly polarized light. Therefore, the display layer 200 can be visually recognized as a portion in which the light is not reflected

or is reflected weaker than that of the surroundings.

On the other hand, when the rotating direction of the circularly polarized light that illuminates the display medium 30 is opposite to the rotating direction $D_S$ of the circularly polarized light which can be reflected by the selective reflection layer 710, the selective reflection layer 710 cannot reflect the circularly polarized light in areas where the display layer 200 is not provided. However, in the area where the display layer 200 is provided, the rotating direction of the circularly polarized light is reversed by passing through the display layer 200, and the selective reflection layer 710 can reflect the resulting circularly polarized light. Therefore, the display layer 200 can be visually recognized as a portion in which reflection is stronger than that of the surroundings.

As described above, the display medium 30 according to the present embodiment can contribute to achievement of various types of display mode. Even when the display mode is diversified in this manner, it is difficult to visually recognize the small-piece layer 220 without magnifying observation, and therefore, according to the display medium 30, it is possible to increase the difficulty of counterfeiting.

In the third embodiment described above, the substrate 700 does not include a colored layer (see the second embodiment), and the substrate 700 may be provided with a colored layer in combination with the selective reflection layer 710.

[4. Other embodiments]

In the embodiments described above, examples in which only one display layer is provided on one substrate have been described, and a plurality of display layers may be provided on one substrate. In addition, the plurality of display layers may be the same as or different from one another. Thus, for example, factors such as (i) the shape of the display layer as viewed in the thickness direction, (ii) the size of the display layer as viewed in the thickness direction, (iii) the array direction of the small-piece layers as viewed in the thickness direction, (iv) the shape of the small-piece layers as viewed in the thickness direction, (v) the size of the small-piece layers as viewed in the thickness direction, (vi) the thickness of the small-piece layers, (vii) the in-plane retardation of the small-piece layers, (viii) the wavelength dispersion properties of the small-piece layers, (ix) the type as a phase difference plate of the small-piece layers, (x) the slow axis direction of the small-piece layers, (xi) the display wavelength range of the small-piece layers, (xii) the rotating direction $D_D$ of circularly polarized light which can be reflected by the small-piece layers, and (xiii) the material of the small-piece layers may be the same as or different from one another among the plurality of display layers.

Thus, for example, the display medium may include a first display layer including a first group of small-piece layers having a slow axis in a certain direction, and a second display layer including a second group of small-piece layers having a slow axis in a direction non-parallel with respect to the above-mentioned slow axis.

For example, the display medium may include a first display layer including a first group of small-piece layers having a first display wavelength range in which the layers are capable of reflecting circularly polarized light with a certain rotating direction, and a second display layer including a second group of small-piece layers having a second display wavelength range in which the layers are capable of reflecting circularly polarized light with a rotating direction opposite to the above-mentioned rotating direction.

Furthermore, the display medium may include components other than those described above as long as the advantageous effects of the present invention are not significantly impaired. For example, the display medium may include a metal reflective layer. Such a metal reflective layer may be provided, for example, between the substrate and the display layer. The metal reflective layer may be provided not only in an area where the display layer is provided but also in an area where the display layer is not provided.

For example, the display medium may include a cover layer which protects each of the above-described layers. These cover layers are preferably provided outside the layer described above. As a specific example, the display medium may include a cover layer, a substrate, a display layer, and a cover layer in this order in the thickness direction. Such a cover layer can be formed of a transparent material and can be formed of, for example, a resin.

Furthermore, for example, the display medium may include an optional layer having a small in-plane retardation between the respective layers described above and as an outermost layer of the display medium as long as the advantageous effects of the present invention are not significantly impaired. An optional layer having such a small in-plane retardation may be referred to as a "low Re layer" hereinafter. The concrete in-plane retardation of the low Re layer is usually 0 nm or more and 5 nm or less. The low Re layer preferably has a high light transmittance, and the total light transmittance of the low Re layer is preferably 80% or more, and more preferably 85% or more. Examples of materials of such a low Re layer may include a hard polyvinyl chloride, a soft polyvinyl chloride, an acrylic resin, glass, a polycarbonate (PC), and a polyethylene terephthalate (PET). The concrete material may be appropriately selected according to applications, texture required, durability, and mechanical strength of the display medium.

[5. Display article]

A display article according to an embodiment of the present invention includes a foundation article and the above-mentioned display medium provided on the foundation article. By providing the display medium on the supporting article, display modes by the display medium can be given to the supporting article, and the display article excellent in design can be obtained.
The supporting article is a target provided with the display medium, and the range thereof is not limited. Examples of the supporting article may include, but are not limited to, a cloth product such as clothing; a leather product such as a bag and shoes; a metal product such as a screw; a paper product such as a price tag; a plastic product such as a card and a plastic banknote; and a rubber product such as a tyre.

Examples

Hereinafter, the present invention will be specifically described by illustrating Examples. However, the present invention is not limited to the Examples described below. The present invention may be optionally modified for implementation without departing from the scope of claims of the present invention and its equivalents.
In the following description, "%" and "part" representing quantity are on the basis of weight, unless otherwise specified. The operation described below was performed under the conditions of normal temperature and normal pressure in the atmosphere, unless otherwise specified.
In the following description, as a commercially available adhesive agent, a transparent tackiness tape "LUCIACS CS9621T" manufactured by Nitto Denko Corp. (thickness: 25 μm, visible light transmittance: 90% or more, and in-plane retardation: 3 nm or less) was used unless otherwise specified.

[Method for measuring in-plane retardation and slow axis direction]

An in-plane retardation and a slow direction were measured at a measurement wavelength of 550 nm with use of a phase difference meter ("Axoscan" manufactured by Axometrics, Inc).

[Method for measuring substantially maximum tilted angle]

An in-plane retardation of a liquid crystal cured layer was measured at a measurement wavelength of 590 nm with use of a phase difference meter ("AxoScan" manufactured by Axometrics, Inc). This measurement was performed a plurality of times while the incidence angle with respect to the liquid crystal cured layer was changed in a range from -50° to 50°. At each time of measurement, the measurement direction was set to be perpendicular to the fast axis of the liquid crystal cured layer.
Based on the measured retardation, a substantially maximum tilted angle of molecules of a liquid crystal compound contained in the liquid crystal cured layer was analyzed by analysis software attached to the above-mentioned phase difference meter (analysis software "Multi-Layer Analysis" manufactured by AxoMetrics, Inc; as analysis conditions, the analysis wavelength was 590 nm, and the number of divided layers was 20).

[Method for measuring reflectance at cholesteric liquid crystal layer]

A temporary supporting body was removed from a multilayer member to obtain a liquid crystal cured layer. The reflectance at the liquid crystal cured layer irradiated with unpolarized light (wavelength: 400 nm to 800 nm) was measured with use of an ultraviolet-visible spectrophotometer ("UV-Vis 550" manufactured by JASCO Corporation).

[Production Example 1: Production of multilayer member (Q1)]

In accordance with Example 1 in International Publication No. 2017/057005, a multilayer member (Q1) including a temporary supporting body serving as a long-length film made of a thermoplastic norbornene resin and a liquid crystal cured layer serving as a positive A plate formed on the temporary supporting body was produced. The in-plane retardation Re of the liquid crystal cured layer was 138 nm, the thickness of the liquid crystal cured layer was 2.3 μm, and the angle formed by the slow axis of the liquid crystal cured layer with respect to the lengthwise direction of the temporary supporting body was 45°. The liquid crystal cured layer had a reverse wavelength dispersion property in which the in-plane retardation gradually increased with increase in the measurement wavelength.

[Production Example 2: Production of multilayer member (Q2)]

In accordance with Example 1 in International Publication No. 2019/188519, a multilayer member (Q2) including a temporary supporting body serving as a long-length film made of a thermoplastic norbornene resin and a liquid crystal cured layer serving as a tilted hybrid orientation plate formed on the temporary supporting body was produced. The in-plane retardation Re of the liquid crystal cured layer was 138 nm, the thickness of the liquid crystal cured layer was 4.0 μm, and the angle formed by the slow axis of the liquid crystal cured layer with respect to the lengthwise direction of the temporary supporting body was 45°. Since the substantially maximum tilted angle of the liquid crystal cured layer was 63°, it was confirmed that the optical axis direction of the liquid crystal cured layer was neither parallel to nor perpendicular to the layer plane. Furthermore, the liquid crystal cured layer had a reverse wavelength dispersion property in which the in-plane retardation gradually increased with increase in the measurement wavelength.

[Production Example 3: Production of multilayer member (Q3)]

A multilayer member (Q3) including a temporary supporting body serving as a long-length film made of a thermoplastic norbornene resin and a liquid crystal cured layer formed on the temporary supporting body was produced by the same method as that of Production Example 1 except that the type of liquid crystal compound was changed to "LC242" manufactured by BASF Co., Ltd., and the thickness was changed so as to obtain an in-plane retardation that allows the layer to be capable of functioning as a 1/4 wave plate. The in-plane retardation Re of the liquid crystal cured layer was 143 nm, the thickness of the liquid crystal cured layer was 1.2 μm, and the angle formed by the slow axis of the liquid crystal cured layer with respect to the lengthwise direction of the temporary supporting body was 45°. The liquid crystal cured layer had a normal wavelength dispersion property in which the in-plane retardation gradually decreased with increase in the measurement wavelength.

[Production Example 4: Production of multilayer member (H1)]

A multilayer member (H1) including a temporary supporting body serving as a long-length film made of a thermoplastic norbornene resin and a liquid crystal cured layer formed on the temporary supporting body was produced by the same method as that of Production Example 3 except that the thickness was changed so as to obtain an in-plane retardation that allows the layer to be capable of functioning as a 1/2 wave plate. The in-plane retardation Re of the liquid crystal cured layer was 280 nm, the thickness of the liquid crystal cured layer was 2.4 μm, and the angle formed by the slow axis of the liquid crystal cured layer with respect to the lengthwise direction of the temporary supporting body was 45°. The liquid crystal cured layer had a normal wavelength dispersion property in which the in-plane retardation gradually decreased with increase in the measurement wavelength.

[Production Example 5: Production of multilayer member (H2)]

A multilayer member (H2) including a temporary supporting body serving as a long-length film made of a thermoplastic norbornene resin and a liquid crystal cured layer formed on the temporary supporting body was produced by the same method as that of Production Example 4 except that the type of liquid crystal compound was changed to one represented by the following formula (X1), and the thickness was changed so as to obtain an in-plane retardation that allows the layer to be capable of functioning as a 1/2 wave plate. The in-plane retardation Re of the liquid crystal cured layer was 275 nm, the thickness of the liquid crystal cured layer was 1.2 μm, and the angle formed by the slow axis of the liquid crystal cured layer with respect to the lengthwise direction of the temporary supporting body was 45°. The liquid crystal cured layer had a normal wavelength dispersion property in which the liquid crystal cured layer gradually decreased with increase in the measurement wavelength.

[Chemical formula 1]

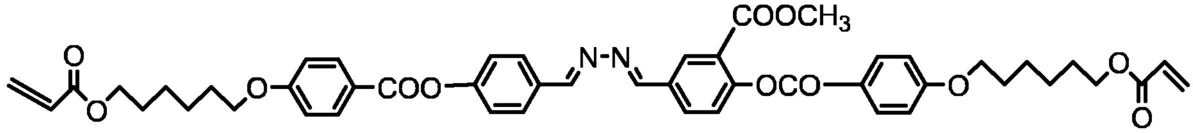

(X1)

[Production Example 6: Production of multilayer member (CLC_W)]

100 parts of a photopolymerizable liquid crystal compound represented by the above-mentioned formula (X1), 25 parts of a photopolymerizable non-liquid crystal compound represented by the following formula (X2), 8 parts of a chiral agent ("LC756" manufactured by BASF Co., Ltd.), 5 parts of a photopolymerization initiator ("Irgacure 907" manufactured by Ciba Japan Co., Ltd.), 0.15 part of a surfactant ("S-420" manufactured by AGC Seimi Chemical Co., Ltd.), and 320 parts of cyclopentanone as a solvent were mixed to prepare a liquid crystal composition.

[Chemical formula 2]

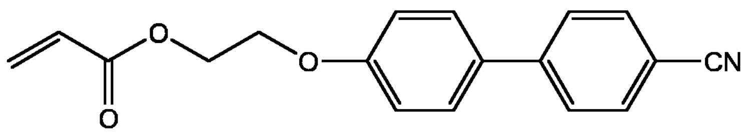

(X2)

As a temporary supporting body, a long-length polyethylene terephthalate film ("A4100" manufactured by Toyobo Co., Ltd.; thickness : 100 μm) was prepared. The temporary supporting body was attached to an feeding portion of a film conveying apparatus, and the following operation was performed while the temporary supporting body was conveyed in the lengthwise direction.

The surface of the temporary supporting body was subjected to a rubbing treatment in a lengthwise direction parallel to the conveying direction. Next, onto the surface of the temporary supporting body, which had been subjected to the rubbing treatment, the liquid crystal composition was applied using a die coater to form a layer of the liquid crystal composition. The layer of the liquid crystal composition was subjected to an orientation treatment in which the liquid crystal composition was heated at 120°C for 4 minutes to orient the liquid crystal composition so as to exhibit a cholesteric liquid crystal phase. After that, the layer of the liquid crystal composition was subjected to a broadband treatment. In this broadband treatment, low intensity UV irradiation of 5 $mJ/cm^2$ to 30 $mJ/cm^2$ and a warming treatment at 100°C to 120°C were alternately repeated a plurality of times, so that the wavelength range in which the circularly polarized light separation function could be exhibited was controlled to have a desired wavelength range. After that, the layer of the liquid crystal composition was irradiated with ultraviolet rays of 800 $mJ/cm^2$ to cure the layer of the liquid crystal composition. In this manner, a multilayer member (CLC_W) including the temporary supporting body and the liquid crystal cured layer having a circularly polarized light separation function was obtained. The reflectance at the liquid crystal cured layer of the multilayer member (CLC_W) was measured by the measurement method described above. As a result of the measurement, the liquid crystal cured layer had a wavelength range, in which the reflectance of unpolarized light was 40% or more, within the wavelength range from 450 nm to 700 nm. The thickness of the liquid crystal cured layer was 5.2 μm.

[Production Example 7: Production of multilayer member (CLC_R)]

A multilayer member (CLC_R) including a temporary supporting body and a liquid crystal cured layer having a circularly polarized light separation function was produced by the same method as that of Production Example 6 except that the quantity of the chiral agent ("LC756" manufactured by BASF Co., Ltd.) was changed to 7 parts and the broadband treatment was not performed. The reflectance at the liquid crystal cured layer of the multilayer member (CLC_R) was measured by the measurement method described above. As a result of the measurement, the liquid crystal cured layer had a wavelength range in which the reflectance of unpolarized light was 40% or more. The wavelength range had a center wavelength around 650 nm and a half width of about 20 nm. The liquid crystal cured layer was visually observed in red under natural light. The thickness of the liquid crystal cured layer was 3.5 μm.

[Production Example 8: Production of multilayer member (CLC_G)]

A multilayer member (CLC_G) including a temporary supporting body and a liquid crystal cured layer having a circularly polarized light separation function was produced by the same method as that of Production Example 6 except that the broadband treatment was not performed. The reflectance at the liquid crystal cured layer of the multilayer member (CLC_G) was measured by the measurement method described above. As a result of the measurement, the liquid crystal cured layer had a wavelength range in which the reflectance of unpolarized light was 40% or more. The wavelength range had a center wavelength around 550 nm and a half width of about 20 nm. The liquid crystal cured layer was visually observed in green under natural light. The thickness of the liquid crystal cured layer was 3.5 μm.

[Production Example 9: Production of multilayer member (CLC_rG)]

A multilayer member (CLC_rG) including a temporary supporting body and a liquid crystal cured layer having a circularly polarized light separation function was produced by the same method as that of Production Example 6 except that 16 parts of a compound (X3) represented by the following formula (X3) was used instead of 8 parts of the chiral agent ("LC756" manufactured by BASF Co., Ltd.) and the broadband treatment was not performed. The reflectance at the liquid crystal cured layer of the multilayer member (CLC_rG) was measured by the measurement method described above. As a result of the measurement, the liquid crystal cured layer had a wavelength range in which the reflectance of unpolarized light was 40% or more. The wavelength range had a center wavelength around 550 nm and a half width of about 20 nm. The liquid crystal cured layer was visually observed in green under natural light. The thickness of the liquid crystal cured layer was 3.5 μm.

[Chemical formula 3]

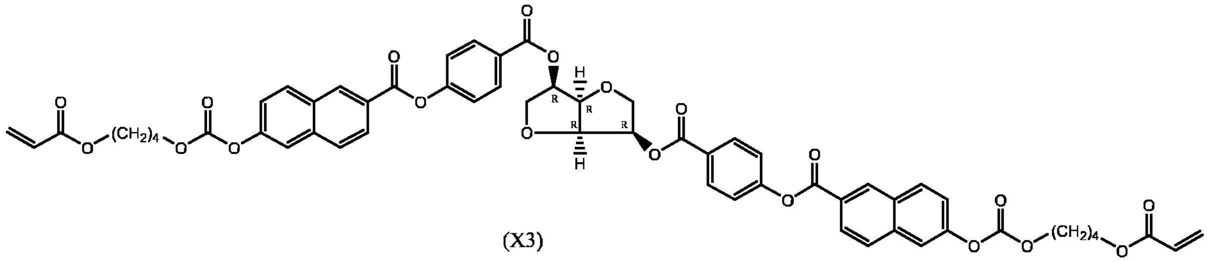

(X3)

(Compound Name)

D-mannitol, 1,4:3,6-dihydro-,2,5-bis[4-[[[6-[[[4-[(1-oxo-2-propene-1-yl)oxy]butoxy]carbonyl]oxy]-2-naphthalenyl]carbonyl]oxy]benzoate]

[Production Example 10: Production of multilayer member (CLC_B)]

A multilayer member (CLC_B) including a temporary supporting body and a liquid crystal cured layer having a circularly polarized light separation function was produced by the same method as that of Production Example 6 except that the quantity of the chiral agent ("LC756" manufactured by BASF Co., Ltd.) was changed to 10 parts and the broadband treatment was not performed. The reflectance at the liquid crystal cured layer of the multilayer member (CLC_B) was measured by the measurement method described above. As a result of the measurement, the liquid crystal cured layer had a wavelength range in which the reflectance of unpolarized light was 40% or more. The wavelength range had a center wavelength around 450 nm and a half width of about 20 nm. The liquid crystal cured layer was visually observed in blue under natural light. The thickness of the liquid crystal cured layer was 3.5 μm.

[Production Example 11: Production of phase difference film (R1)]

A resin film formed of a thermoplastic norbornene resin ("ZEONOR film" manufactured by ZEON Corporation; a film manufactured by extrusion molding. an unstretched product) was prepared. The resin film was stretched in one direction at a stretching temperature of 130°C to obtain a phase difference film (R1) having an in-plane retardation that allows the film to be capable of functioning as a 1/2 wave plate. The phase difference film (R1) had a thickness of 38 μm and an in-plane retardation of 280 nm.

[Production Example 12: Production of phase difference film (R2)]

A phase difference film (R2) was produced by the same method as that of Production Example 11 except that the stretching ratio was changed to obtain an in-plane retardation that allows the film to be capable of functioning as a 1/4 wave plate. The phase difference film (R2) had a thickness of 47 μm and an in-plane retardation of 143 nm.

[Production Example 13: Production of circularly polarized light selective reflection film (D)]

The phase difference film (R2) produced in Production Example 12 was attached onto a linearly polarized light selective reflection film "DBEF" manufactured by 3M Corporation via a commercially available adhesive agent to produce

a circularly polarized light selective reflection film (D). The attaching process described above was performed with adjusting the direction of the slow axis of the phase difference film (R2) so that the circularly polarized light selective reflection film (D) can selectively reflect the clockwise circularly polarized light.

[Example 101]

(Description of overview of display medium)

FIG. 22 is a plan view schematically illustrating a display medium 800 produced in Example 101. FIG. 23 is a cross-sectional view schematically illustrating the display medium 800 produced in Example 101.

As illustrated in FIGS. 22 and 23, the display medium 800 produced in Example 101 included a display layer 830 via an adhesive layer 820 on a substrate 810. The display layer 830 had a shape of the block letter "T" with a width of approximately 7 mm as viewed in the thickness direction. Hereinbelow, a method for producing the display medium 800 will be described.

(Production of primary member)

Into the liquid crystal cured layer of the multilayer member (Q1) produced in Production Example 1, split lines were formed by a 3 mm-square cross cut method described below.

<3mm-square cross cut method>

In the 3mm-square cross cut method, a plurality of split lines were formed linearly in the liquid crystal cured layer in conformity to JIS-K5600-5-6 with use of a process device ("Cross Cut Adhesion TestKIT CC3000" manufactured by TQC Co.). The split lines were formed in two directions perpendicular to each other with a pitch of 3 mm. The depth of the split lines was adjusted so as to be larger than the thickness of the liquid crystal cured layer and so as not to cause the temporary supporting body to be completely cut. The adjustment of the depth of the split lines was performed by adjusting the cutting depth of the blade of the above-mentioned process device.

By forming the split lines by the above-mentioned 3mm-square cross cut method, a split was formed in the liquid crystal cured layer to obtain multiple small-piece layers sectioned by the split. As a result, a primary member including a temporary supporting body and a transfer material layer including the multiple small-piece layers formed on the temporary supporting body was obtained. The small-piece layers were arrayed in two directions perpendicular to each other, and each of the small-piece layers had a 3mm square shape as viewed in the thickness direction.

(Formation of latent image on surface of substrate)

As a substrate, a long-length film (thickness: 100 $\mu$m) made of a thermoplastic norbornene resin was prepared. An adhesive layer was formed in an area of the shape of the letter "T" on the surface of the substrate. Specifically, a commercially available adhesive agent having tackiness was cut into the shape of the letter "T", and the cut adhesive layer was attached to the substrate. In this manner, a latent image of the letter "T" was formed by the adhesive layer on the surface of the substrate.

(Formation of display layer)

The substrate, on which the latent image was formed, and the primary member were attached to each other by a roll-to-roll method while being conveyed in the lengthwise direction. Specifically, the surface of the substrate on the side provided with the adhesive layer and the surface of the primary member on the side provided with the transfer material layer were attached to each other by a nip roll. After that, the temporary supporting body of the primary member was detached. In the area on the substrate provided with no adhesive layer, the small-piece layers included in the transfer material layer did not remain on the substrate and were detached together with the temporary supporting body. In the area on the substrate provided with the adhesive layer, the small-piece layers included in the transfer material layer remained on the substrate, and only the temporary supporting body was detached. As a result, on the substrate, the plurality of small-piece layers were provided via the adhesive layer selectively in the area of the shape of the letter "T" where the adhesive layer was formed. Thus, as an assemble of these small-piece layers, a display layer with the shape of the letter "T" as viewed in the thickness direction was formed. In this manner, as illustrated in FIGS. 22 and 23, the display medium 800 including the substrate 810 and the display layer 830 provided via the adhesive layer 820 on the substrate 810 was obtained.

[Example 102]

In the step of (production of primary member), the method for forming the split lines in the liquid crystal cured layer was changed from the 3mm-square cross cut method to a 50μm-square roll press method described below.

<50μm-square roll press method>

In the 50μm-square roll press method, a plurality of split lines were formed linearly in the liquid crystal cured layer by a method described in Example 1 in International Publication No. 2019/189246. The split lines were formed in two directions perpendicular to each other with a pitch of 50 μm. The depth of the split lines was adjusted so as to be larger than the thickness of the liquid crystal cured layer and so as not to cause the temporary supporting body to be completely cut. The adjustment of the depth of the split lines was performed by adjusting the pressing force. The plurality of small-piece layers included in the primary member obtained by the above-mentioned 50μm-square roll press method were arrayed in two directions perpendicular to each other, and each of the small-piece layers had a 50μm square shape as viewed in the thickness direction.

Except for the above-described matters, a display medium including the substrate and the display layer provided via the adhesive layer on the substrate was obtained by the same method as that of Example 101.

[Example 103]

In the step of (production of primary member), the method for forming the split lines in the liquid crystal cured layer was changed from the 3mm-square cross cut method to a 20μm-square roll press method described below. <20μm-square roll press method>

In the 20μm-square roll press method, a plurality of split lines were formed in the liquid crystal cured layer by the same method as that of the 50μm-square roll press method except that the pitch of the split lines was changed from 50 μm to 20 μm. The plurality of small-piece layers included in the primary member obtained by the above-mentioned 20μm-square roll press method were arrayed in two directions perpendicular to each other, and each of the small-piece layers had a 20μm square shape as viewed in the thickness direction.

Except for the above-described matters, a display medium including the substrate and the display layer provided on the substrate via the adhesive layer was obtained by the same method as that of Example 101.

[Example 104]

Instead of the multilayer member (Q1) produced in Production Example 1, the multilayer member (Q2) produced in Production Example 2 was used. Furthermore, in the step of (production of primary member), the method for forming the split lines in the liquid crystal cured layer was changed from the 3mm-square cross cut method to a 20μm-square roll press method. Except for the above-described matters, a display medium including the substrate and the display layer provided on the substrate via the adhesive layer was obtained by the same method as that of Example 101.

[Examples 105 to 112]

Instead of the multilayer member (Q1) produced in Production Example 1, the multilayer members shown in Table 1 were used. Furthermore, in the step of (production of primary member), the method for forming the split lines in the liquid crystal cured layer was changed from the 3mm-square cross cut method to the 50μm-square roll press method. Except for the above-described matters, display mediums including the substrate and the display layer provided on the substrate via the adhesive layer were obtained by the same method as that of Example 101.

[Comparative Example 1]

An adhesive layer was formed on one surface of the phase difference film (R2) produced in Production Example 12. After that, the phase difference film (R2) was cut out to obtain a film piece having a shape of a block letter "T" with a width of approximately 7 mm. The surface of this film piece on the side provided with the tackiness agent layer and the same substrate used in Example 101 were attached to each other in a batch process. In this manner, a display medium including the substrate and the display layer consisting of the film pieces of the phase difference film (R2) provided on the substrate via the adhesive layer was obtained.

[Comparative Example 2]

A display medium including a substrate and a display layer consisting of a film piece of the phase difference film (R1) provided on the substrate via an adhesive layer was obtained by the same method as that of Comparative Example 1 except that the phase difference film (R1) produced in Production Example 11 was used instead of the phase difference film (R2) produced in Production Example 12.

[Comparative Example 3]

A display medium including a substrate and a display layer consisting of a film piece of the circularly polarized light selective reflection film (D) provided on this substrate via an adhesive layer was obtained by the same method as that of Comparative Example 1 except that the circularly polarized light selective reflection film (D) produced in Production Example 13 was used instead of the phase difference film (R2) produced in Production Example 12.

[Summary of configurations of Examples 101 to 112 and Comparative Examples 1 to 3]

The configurations of Examples 101 to 112 and Comparative Examples 1 to 3 described above are summarized in Table 1 below. In Table 1 described below, the meanings of the abbreviations are as follows:

Re: the in-plane retardation of the display layer and the small-piece layers;
Dispersion: the wavelength dispersion property of the display layer and the small-piece layers;
Reflection color: the color of the circularly polarized light reflected by the display layer and the small-piece layers having a circularly polarized light separation function;
Reflected polarized light: the rotating direction of the circularly polarized light reflected by the display layer and the small-piece layers having a circularly polarized light separation function;
Shape: the shape of the small-piece layer;
Size: the width of the small-piece layer;
R: Red;
G: Green; and
B: Blue.

[Table 1]

[Table 1. Configurations of Examples 101 to 112 and Comparative Examples 1 to 3]

| | small-piece layer | | | | | | | multilayer member | transferring |
|---|---|---|---|---|---|---|---|---|---|
| | Re (nm) | dispersion | reflection color | reflected polarized light | thickness (μm) | shape | size | | |
| Example | | | | | | | | | |
| 101 | 138 | reverse | - | - | 2.3 | square | 3mm | Q1 | done |
| 102 | 138 | reverse | - | - | 2.3 | square | 50μm | Q1 | done |
| 103 | 138 | reverse | - | - | 2.3 | square | 20μm | Q1 | done |
| 104 | 138 (tilted) | reverse | - | - | 4.0 | square | 20μm | Q2 | done |
| 105 | 143 | normal | - | - | 1.2 | square | 50μm | Q3 | done |
| 106 | 280 | normal | - | - | 2.4 | square | 50μm | HI | done |
| 107 | 275 | normal | - | - | 1.2 | square | 50μm | H2 | done |
| 108 | - | - | R | clockwise | 3.5 | square | 50μm | CLC R | done |
| 109 | - | - | G | clockwise | 3.5 | square | 50μm | CLC G | done |
| 110 | - | - | G | counterclockwise | 3.5 | square | 50gm | CLC_rG | done |
| 111 | - | - | B | clockwise | 3.5 | square | 50μm | CLC B | done |
| 112 | - | - | silver (wide band) | clockwise | 5.2 | square | 50μm | CLC_W | done |
| Comparative . Example | | | | | | | | | |
| 1 | 143 | normal | - | - | 47 | non | non | R2 | no |
| 2 | 280 | normal | - | - | 38 | non | non | R1 | no |
| 3 | - | - | silver (wide band) | clockwise | 150 | non | non | D | no |

[Observation of display media obtained in Examples 101 to 112 and Comparative Examples 1 to 3]

The display media obtained in Examples 101 to 112 and Comparative Examples 1 to 3 were observed by Observation Methods 1 to 4 described below.

(Observation Method 1: Transmissive crossed Nicols observation of display layer)

Two commercially available linear polarizing plates were stacked on top of another on a backlight including a fluorescent lamp serving as an unpolarized light source. The two linear polarizing plates were placed in the crossed Nicols layout, in which the absorption axes thereof are orthogonal to each other as viewed in the thickness direction. Between the two linear polarizing plates, each of the display media obtained in Examples 101 to 105 and Comparative Example 1 was placed. Each of the display media was set so that the slow axis direction of the display layer and the slow axis direction of the small-piece layers included in the display layer form an angle of 45° with respect to the absorption axes of the linear polarizing plates. After that, the backlight was lit, light that transmitted through each of the display media was observed, and whether the image of the display layer was visible or invisible was determined.

(Observation Method 2: Transmissive parallel Nicols observation of display layer)

Two commercially available linear polarizing plates were stacked on top of another on a backlight including a fluorescent lamp serving as an unpolarized light source. The two linear polarizing plates were placed in the parallel Nicols layout, in which the absorption axes thereof are parallel as viewed in the thickness direction. Between the two linear polarizing plates, each of the display media obtained in Examples 106 to 107 and Comparative Example 2 was placed. Each of the display media was set so that the slow axis direction of the display layer and the slow axis direction of the small-piece layers included in the display layer form an angle of 45° with respect to the absorption axes of the linear polarizing plates. After that, the backlight was lit, light that transmitted through each of the display media was observed, and whether the image of the display layer was visible or invisible was determined.

(Observation Method 3: Circular polarizing plate observation of display layer)

Each of the display media obtained in Examples 108 to 112 and Comparative Example 3 was irradiated with a fluorescent lamp serving as an unpolarized light source, and light reflected by each of the display media was observed. As the above-mentioned observation, (i) observation with the naked eye, (ii) observation through a clockwise circular polarizing plate, and (iii) observation through a counterclockwise circular polarizing plate were carried out. As the above-mentioned clockwise circular polarizing plate and counterclockwise circular polarizing plate, a glasses-shape clockwise circular polarizing plate (forward circular polarizing plate) and counterclockwise circular polarizing plate (counter circular polarizing plate) used for watching a 3D television were used. In these types of observation, whether the image of the display layer was visible or invisible was determined.

(Observation Method 4: Observation of small-piece layer)

The display layer of the display medium was observed (i) with the naked eye and (ii) through a microscope, and whether each of the small-piece layers included in the display layer was visible or invisible was determined.

[Results of Examples 101 to 112 and Comparative Examples 1 to 3]

Results of Examples 101 to 112 and Comparative Examples 1 to 3 are shown in Table 2 provided below.

[Table 2]

[Table 2. Results of Examples 101 to 112 and Comparative Examples 1 to 3]

| | Observation of Display layer | | | | | | Observation of small-piece layers | |
|---|---|---|---|---|---|---|---|---|
| | method | naked eye | clockwise circular polarizing plate | counter - clockwise circular polarizing plate | crossed Nicols | parallel Nicols | naked eye | microscope |
| Example | | | | | | | | |
| 101 | transmissive | | | | visible | | visible | visible |
| 102 | transmissive | | | | visible | | invisible | visible |
| 103 | transmissive | | | | visible | | invisible | visible |
| 104 | transmissive | | | | visible | | invisible | visible |
| 105 | transmissive | | | | visible | | invisible | visible |
| 106 | transmissive | | | | | visible | invisible | visible |
| 107 | transmissive | | | | | visible | invisible | visible |
| 108 | reflective | visible | visible | invisible | | | invisible | visible |
| 109 | reflective | visible | visible | invisible | | | invisible | visible |
| 110 | reflective | visible | invisible | visible | | | invisible | visible |
| 111 | reflective | visible | visible | invisible | | | invisible | visible |
| 112 | reflective | visible | visible | invisible | | | invisible | visible |
| Comparative Example | | | | | | | | |
| 1 | transmissive | | | | visible | | non | non |
| 2 | transmissive | | | | | visible | non | non |
| 3 | reflective | visible | visible | invisible | | | non | non |

[Discussion of Examples 101 to 112 and Comparative Examples 1 to 3]

From Table 1 and Table 2, the display layers of the display media obtained in Examples 101 to 105 and Comparative Example 1 can be visible in the crossed Nicols observation, and the display layers of the display media obtained in Examples 106 to 107 and Comparative Example 2 can be visible in the parallel Nicols observation. The display layers of the display media obtained in Examples 108 to 112 and Comparative Example 3 can be visible in the observation through one of the clockwise circular polarizing plate and the counterclockwise circular polarizing plate and can be invisible in the observation through the other. Accordingly, it is apparent that these display media have a large variety of display property.

Among these, the display media obtained in Examples can be produced by an inexpensive transfer method using the roll-to-roll method. On the other hand, the display media obtained in Comparative Examples cannot be produced by the roll-to-roll method, and attaching by a batch process is required, which is disadvantageous in terms of cost.

In addition, in each of the display media obtained in Examples, the display layer includes the small-piece layers having uniform shapes and arrayed with regularity. Hence, each of the display media obtained in Examples is made to be highly difficult to produce and is thus made to be highly difficult to counterfeit. In particular, since the display layer of each of the display media obtained in Examples 102 to 112 cannot be visually recognized with the naked eye, it is difficult to notice the fact itself that the small-piece layer exists. Therefore, in particular, the display medium including such a small-size small-piece layer can increase the difficulty of counterfeiting. Such an effect of being able to increase the difficulty of counterfeiting is useful since the effect cannot be obtained in the display media in Comparative Examples 1 to 3 including no small-piece layers.

[Example 201]

(Production of substrate)

Black paper was attached onto the surface of the multilayer member (CLC_W) produced in Production Example 6 on the side provided with the temporary supporting body to form a colored layer, thereby obtaining a long-length substrate including the colored layer, the support layer as a temporary supporting body, and the liquid crystal cured layer having a circularly polarized light separation function in this order.

(Formation of latent image on surface of substrate)

An adhesive layer was formed in an area of the shape of the letter "T" on the surface of the substrate on the side provided with the liquid crystal cured layer. In this manner, a latent image of the letter "T" was formed by the adhesive layer on the surface of the substrate.

(Formation of display layer)

The substrate, on which the latent image was formed, and the primary member produced in Example 102 were attached to each other by a roll-to-roll method while being conveyed in the lengthwise direction. Specifically, the surface of the substrate on the side provided with the adhesive layer and the surface of the primary member on the side provided with the transfer material layer were attached to each other with a nip roll. After that, the temporary supporting body of the primary member was detached. On the substrate, a plurality of small-piece layers were provided via the adhesive layer selectively in an area of the shape of the letter "T" on which the adhesive layer was formed. Thus, a first display layer with the shape of the letter "T" as viewed in the thickness direction was formed as an assemble of these small-piece layers. In this manner, a display medium including the substrate and the first display layer provided via the adhesive layer on the substrate was obtained.

[Example 202]

(Production of primary member for forming second display layer)

A multilayer member (Q1-1) including a temporary supporting body and a liquid crystal cured layer formed on the temporary supporting body was produced by the same method as that of Production Example 1 except that the stretching direction of the long-length film used as the temporary supporting body was changed. The in-plane retardation Re of the liquid crystal cured layer was 138 nm, the thickness of the liquid crystal cured layer was 2.3 μm, and the angle formed by the slow axis of the liquid crystal cured layer with respect to the lengthwise direction of the temporary supporting body was 135°. The liquid crystal cured layer had a reverse wavelength dispersion property in which the in-plane

retardation gradually increased with increase in the measurement wavelength.

Split lines were formed in the liquid crystal cured layer of the multilayer member (Q1-1) by the 50μm-square roll press method to obtain a primary member including a temporary supporting body and a transfer material layer including multiple small-piece layers formed on the temporary supporting body.

(Formation of latent image for second display layer on surface of substrate)

A display medium was produced by the same method as that of Example 201. An adhesive layer was formed in an area of the shape of the letter "T" on the surface of the substrate included in the display medium on the side provided with the first display layer. At this time, the adhesive layer was formed so as not to overlap with the first display layer. In this manner, a latent image for the second display layer was formed by the adhesive layer on the surface of the substrate.

(Formation of second display layer)

The display medium, on which the latent image for the second display layer was formed, and the primary member were attached to each other by a roll-to-roll method while being conveyed in the lengthwise direction. Specifically, the surface of the display medium on the side provided with the adhesive layer and the surface of the primary member on the side provided with the transfer material layer were attached to each other with a nip roll. After that, the temporary supporting body of the primary member was detached. On the substrate, a plurality of small-piece layers were provided via the adhesive layer selectively in an area of the shape of the letter "T" on which the adhesive layer was formed. Thus, a second display layer with the shape of the letter "T" as viewed in the thickness direction was formed as an assemble of these small-piece layers. In this manner, a display medium including the long-length substrate, which included the colored layer, the temporary supporting body, and the liquid crystal cured layer having a circularly polarized light separation function in this order, and the first display layer and the second display layer provided on the substrate via the adhesive layer was obtained.

[Example 203]

(Production of primary member for forming third display layer)

A multilayer member (Q1-2) including a temporary supporting body and a liquid crystal cured layer formed on the temporary supporting body was produced by the same method as that of Production Example 1 except that the stretching direction of the long-length film used as the temporary supporting body was changed. The in-plane retardation Re of the liquid crystal cured layer was 138 nm, the thickness of the liquid crystal cured layer was 2.3 μm, and the angle formed by the slow axis of the liquid crystal cured layer with respect to the lengthwise direction of the temporary supporting body was 180°. The liquid crystal cured layer had a reverse wavelength dispersion property in which the in-plane retardation gradually increased with increase in the measurement wavelength.

Split lines were formed in the liquid crystal cured layer of the multilayer member (Q1-2) by the 50μm-square roll press method to obtain a primary member including a temporary supporting body and a transfer material layer including multiple small-piece layers formed on the temporary supporting body.

(Formation of latent image for third display layer on surface of substrate)

A display medium was produced by the same method as that of Example 202. An adhesive layer was formed in an area of the shape of the letter "T" on the surface of the substrate included in the display medium on the side provided with the first display layer. At this time, the adhesive layer was formed so as not to overlap with the first display layer and the second display layer. In this manner, a latent image for the third display layer was formed by the adhesive layer on the surface of the substrate.

(Formation of third display layer)

The display medium, on which the latent image for the third display layer was formed, and the primary member were attached to each other by a roll-to-roll method while being conveyed in the lengthwise direction. Specifically, the surface of the display medium on the side provided with the adhesive layer and the surface of the primary member on the side provided with the transfer material layer were attached to each other with a nip roll. After that, the temporary supporting body of the primary member was detached. On the substrate, a plurality of small-piece layers were provided via the adhesive layer selectively in an area of the shape of the letter "T" on which the adhesive layer was formed. Thus,

a third display layer with the shape of the letter "T" as viewed in the thickness direction was formed as an assemble of these small-piece layers. In this manner, a display medium including the long-length substrate, which included the colored layer, the temporary supporting body, and the liquid crystal cured layer having a circularly polarized light separation function in this order, and the first display layer, the second display layer, and the third display layer provided on the substrate via the adhesive layer was obtained.

[Example 204]

A display medium including a long-length substrate, which included a colored layer, a temporary supporting body, and a liquid crystal cured layer having a circularly polarized light separation function in this order, and a first display layer provided on the substrate via an adhesive layer was obtained by the same manner as that of Example 201 except that the primary member produced in Example 106 was used instead of the primary member produced in Example 102.

[Example 205]

(Production of primary member for forming second display layer)

A multilayer member (H1-1) including a temporary supporting body and a liquid crystal cured layer formed on the temporary supporting body was produced by the same method as that of Production Example 4 except that the stretching direction of the long-length film used as the temporary supporting body was changed. The in-plane retardation Re of the liquid crystal cured layer was 280 nm, the thickness of the liquid crystal cured layer was 2.4 μm, and the angle formed by the slow axis of the liquid crystal cured layer with respect to the lengthwise direction of the temporary supporting body was 135°. The liquid crystal cured layer had a normal wavelength dispersion property in which the in-plane retardation gradually decreased with increase in the measurement wavelength.

A primary member including a temporary supporting body and a transfer material layer including multiple small-piece layers formed on the temporary supporting body was obtained by forming split lines in the liquid crystal cured layer of the multilayer member (H1-1) by the 50μm-square roll press method.

(Formation of latent image for second display layer on surface of substrate)

A display medium was produced by the same manner as that of Example 204. An adhesive layer was formed in an area of the shape of the letter "T" on the surface of the substrate included in the display medium on the side provided with the first display layer. At this time, the adhesive layer was formed so as not to overlap with the first display layer. In this manner, a latent image for the second display layer was formed by the adhesive layer on the surface of the substrate.

(Formation of second display layer)

The display medium, on which the latent image for the second display layer was formed, and the primary member were attached to each other by a roll-to-roll method while being conveyed in the lengthwise direction. Specifically, the surface of the display medium on the side provided with the adhesive layer and the surface of the primary member on the side provided with the transfer material layer were attached to each other with a nip roll. After that, the temporary supporting body of the primary member was detached. On the substrate, a plurality of small-piece layers were provided via the adhesive layer selectively in an area of the shape of the letter "T" on which the adhesive layer was formed. Thus, a second display layer with the shape of the letter "T" as viewed in the thickness direction was formed as an assemble of these small-piece layers. In this manner, a display medium including the long-length substrate, which included the colored layer, the temporary supporting body, and the liquid crystal cured layer having a circularly polarized light separation function in this order, and the first display layer and the second display layer provided on the substrate via the adhesive layer was obtained.

[Example 206]

A display medium including a long-length substrate, which included a colored layer, a temporary supporting body, and a liquid crystal cured layer having a circularly polarized light separation function in this order, and a first display layer and a second display layer provided on the substrate via an adhesive layer was obtained by the same method as that of Example 205 except that the primary member produced in Example 102 was used as the primary member for the second display layer.

[Example 207]

(Production of substrates)

A black paper was attached onto one surface of an optically isotropic long-length film (thickness: 100 μm) made of a thermoplastic norbornene resin to form a colored layer, and thus a long-length substrate including the colored layer and a film layer was obtained.

(Formation of latent image on surface of substrate)

An adhesive layer was formed in an area of the shape of the letter "T" on the surface of the substrate on the side provided with the film layer. In this manner, a latent image of the letter "T" was formed by the adhesive layer on the surface of the substrate.

(Formation of display layer)

The substrate, on which the latent image was formed, and the primary member produced in Example 109 were attached to each other by a roll-to-roll method while being conveyed in the lengthwise direction. Specifically, the surface of the substrate on the side provided with adhesive layer and the surface of the primary member on the side provided with the transfer material layer were attached to each other with a nip roll. After that, the temporary supporting body of the primary member was detached. On the substrate, a plurality of small-piece layers were provided via the adhesive layer selectively in an area of the shape of the letter "T" on which the adhesive layer was formed. Thus, a first display layer with the shape of the letter "T" as viewed in the thickness direction was formed as an assemble of these small-piece layers. In this manner, a display medium including the substrate and the first display layer provided via the adhesive layer on the substrate was obtained.

[Example 208]

(Formation of latent image for second display layer on surface of substrate)

A display medium was produced by the same method as that of Example 207. An adhesive layer was formed in an area of the shape of the letter "T" on the surface of the substrate included in the display medium on the side provided with the first display layer. At this time, the adhesive layer was formed so as not to overlap with the first display layer. In this manner, a latent image for the second display layer was formed by the adhesive layer on the surface of the substrate.

(Formation of second display layer)

The display medium, on which the latent image for the second display layer was formed, and the primary member produced in Example 110 were attached to each other by a roll-to-roll method while being conveyed in the lengthwise direction. Specifically, the surface of the display medium on the side provided with the adhesive layer and the surface of the primary member on the side provided with the transfer material layer were attached to each other with a nip roll. After that, the temporary supporting body of the primary member was detached. On the substrate, a plurality of small-piece layers were provided via the adhesive layer selectively in an area of the shape of the letter "T" on which the adhesive layer was formed. Thus, a second display layer with the shape of the letter "T" as viewed in the thickness direction was formed as an assemble of these small-piece layers. In this manner, a display medium including the long-length substrate, which included the colored layer and the film layer, and the first display layer and the second display layer provided on the substrate via the adhesive layer was obtained.

[Example 209]

A display medium including a long-length substrate, which included a colored layer and a film layer, and a first display layer provided on the substrate via an adhesive layer was obtained by the same method as that of Example 207 except that the primary member produced in Example 112 was used instead of the primary member produced in Example 109.

[Example 210]

(Formation of latent image for second display layer on surface of substrate)

A display medium was produced by the same method as that of Example 209. An adhesive layer was formed in an area of the shape of the letter "T" on the surface of the substrate included in the display medium on the side provided with the first display layer. At this time, the adhesive layer was formed so as not to overlap with the first display layer. In this manner, a latent image for the second display layer was formed by the adhesive layer on the surface of the substrate.

(Formation of second display layer)

The display medium, on which the latent image for the second display layer was formed, and the primary member produced in Example 110 were attached to each other by a roll-to-roll method while being conveyed in the lengthwise direction. Specifically, the surface of the display medium on the side provided with the adhesive layer and the surface of the primary member on the side provided with the transfer material layer were attached to each other with a nip roll. After that, the temporary supporting body of the primary member was detached. On the substrate, a plurality of small-piece layers were provided via the adhesive layer selectively in an area of the shape of the letter "T" on which the adhesive layer was formed. Thus, a second display layer with the shape of the letter "T" as viewed in the thickness direction was formed as an assemble of these small-piece layers. In this manner, a display medium including the long-length substrate, which included the colored layer and the film layer, and the first display layer and the second display layer provided on the substrate via the adhesive layer was obtained.

[Example 211]

A display medium including a long-length substrate, which included a colored layer, a temporary supporting body, and a liquid crystal cured layer having a circularly polarized light separation function in this order, and a first display layer provided on the substrate via an adhesive layer was obtained by the same method as that of Example 201 except that the primary member produced in Example 105 was used instead of the primary member produced in Example 102.

[Example 212]

A display medium including a long-length substrate, which included a colored layer, a temporary supporting body, and a liquid crystal cured layer having a circularly polarized light separation function in this order, and a first display layer provided on the substrate via an adhesive layer was obtained by the same method as that of Example 201 except that the primary member produced in Example 104 was used instead of the primary member produced in Example 102.

[Comparative Example 4]

An adhesive layer was formed on one surface of the phase difference film (R2) produced in Production Example 12. After that, the phase difference film (R2) was cut out to obtain a film piece having a shape of a block letter "T" with a width of approximately 7 mm. The surface of this film piece on the side provided with the tackiness agent layer and the substrate produced in Example 201 were attached to each other in a batch process. In this manner, a display medium including the substrate, which included the colored layer, the temporary supporting body, and the liquid crystal cured layer having a circularly polarized light separation function in this order, and the first display layer consisting of the film pieces of the phase difference film (R2) provided on the substrate via the adhesive layer was obtained.

[Comparative Example 5]

A display medium including a substrate, which included a colored layer, a temporary supporting body, and a liquid crystal cured layer having a circularly polarized light separation function in this order, and a first display layer consisting of film pieces of the phase difference film (R1) provided on the substrate via an adhesive layer was obtained by the same method as that of Comparative Example 4 except that the phase difference film (R1) produced in Production Example 11 was used instead of the phase difference film (R2) produced in Production Example 12.

[Comparative Example 6]

An adhesive layer was formed on one surface of the circularly polarized light selective reflection film (D) produced

in Production Example 13. After that, the circularly polarized light selective reflection film (D) was cut out to obtain a film piece having a shape of a block letter "T" with a width of approximately 7 mm. The surface of this film piece on the side provided with the tackiness agent layer and the substrate produced in Example 207 were attached to each other in a batch process. In this manner, a display medium including the substrate, which included the colored layer and the film layer, and the first display layer consisting of the film pieces of the circularly polarized light selective reflection film (D) provided on the substrate via the adhesive layer was obtained.

[Summary of configurations of Examples 201 to 212 and Comparative Examples 4 to 6]

The configurations of Examples 201 to 212 and Comparative Examples 4 to 6 described above are summarized in Table 3 below. In Table 3 described below, the meanings of the abbreviations are as follows:

CLC: the liquid crystal cured layer having a circularly polarized light separation function;
Re: the in-plane retardation of the display layer and the small-piece layers;
Dispersion: the wavelength dispersion property of the display layer and the small-piece layers;
θ: the angle formed by the slow axis of the display layer and the small-piece layers with respect to the lengthwise direction of the substrate;
Color: the color of the circularly polarized light reflected by the display layer and the small-piece layers having a circularly polarized light separation function; and

Reflected polarized light: the rotating direction of the circularly polarized light reflected by the display layer and the small-piece layers having a circularly polarized light separation function.

[Table 3]

[Table 3. Configurations of Examples 201 to 212 and Comparative Examples 4 to 6]

| | substrate | first display layer | | | | | second display layer | | | | | third display layer | | |
|---|---|---|---|---|---|---|---|---|---|---|---|---|---|---|
| | CLC | Re (nm) | dispersion | θ (°) | color | reflected | Re (nm) | dispersion | θ (°) | color | reflected | Re (nm) | dispersion | θ (°) |
| example | | | | | | | | | | | | | | |
| 201 | included | 138 | reverse | 45 | - | - | | | | | | | | |
| 202 | included | 138 | reverse | 45 | - | - | 138 | reverse | 135 | - | | | | |
| 203 | included | 138 | reverse | 45 | - | - | 138 | reverse | 135 | - | | 138 | reverse | 180 |
| 204 | included | 280 | normal | 45 | - | - | | | | | | | | |
| 205 | included | 280 | normal | 45 | - | - | 280 | normal | 135 | - | - | | | |
| 206 | included | 280 | normal | 45 | - | - | 138 | reverse | 45 | - | - | | | |
| 207 | - | - | - | - | G | clockwise | | | | | | | | |
| 208 | - | - | - | - | G | clockwise | - | - | - | G | counter - clockwise | | | |
| 209 | - | - | - | - | silver | clockwise | | | | | | | | |
| 210 | - | - | - | - | silver | clockwise | - | - | - | G | counter - clockwise | | | |
| 211 | included | 143 | normal | 45 | - | - | | | | | | | | |
| 212 | included | 138 (tilted) | reverse | 45 | - | - | | | | | | | | |
| comparative example | | | | | | | | | | | | | | |
| 4 | included | 143 | normal | 45 | - | - | | | | | | | | |
| 5 | included | 280 | normal | 45 | - | - | | | | | | | | |
| 6 | - | - | - | - | silver | clockwise | | | | | | | | |

[Observation of display media obtained in Examples 201 to 212 and Comparative Examples 4 to 6]

The display media obtained in Examples 201 to 212 and Comparative Examples 4 to 6 were observed by Observation Methods 5 to 8 described below.

(Observation Method 5: Naked-eye observation of display layer)

Each of the display media obtained in Examples 201 to 212 and Comparative Examples 4 to 6 was irradiated with a fluorescent lamp serving as an unpolarized light source, and light reflected by each of the display media was observed with the naked eye. In the above-mentioned observation, whether the image of the display layer was visible or invisible was determined.

(Observation Method 6: Polarizing sunglasses observation of display layer)

Each of the display media obtained in Examples 201 to 206, 211, and 212 and Comparative Examples 4 to 5 was irradiated with a fluorescent lamp serving as an unpolarized light source while being rotated around the rotation axis in the thickness direction, and light reflected by each of the display media was observed through a linear polarizing plate. As the linear polarizing plate, commercially available polarizing sunglasses were used. In the above-mentioned observation, whether the image of the display layer was visible or invisible was determined. It was judged as "visible" in a case in which the image was visible at one or more rotation angles, and it was judged as "invisible" in a case in which the image was invisible at all rotation angles.

(Observation Method 7: Observation of display layer under irradiation with polarized light)

Each of the display media obtained in Examples 201 to 203, 211, and 212 and Comparative Example 4 was irradiated with linearly polarized light, and light reflected by each of the display media was observed with the naked eye. In the above-mentioned observation, the color of the display layer was identified.

(Observation Method 8: Circular polarizing plate observation of display layer)

Each of the display media obtained in Examples 204 to 210 and Comparative Examples 5 to 6 was irradiated with a fluorescent lamp serving as an unpolarized light source, and light reflected by each of the display media was observed. As the above-mentioned observation, (i) observation through a clockwise circular polarizing plate and (ii) observation through a counterclockwise circular polarizing plate were performed. As the above-mentioned clockwise circular polarizing plate and counterclockwise circular polarizing plate, a glasses-shape clockwise circular polarizing plate (forward circular polarizing plate) and counterclockwise circular polarizing plate (counter circular polarizing plate) used for watching a 3D television were used. In these types of observation, whether the image of the display layer was visible or invisible was determined.

(Observation Method 9: Observation of small-piece layers)

The display layer of the display medium was observed (i) with the naked eye and (ii) through a microscope, and whether each of the small-piece layers included in the display layer was visible or invisible was determined.

[Results of Examples 201 to 212 and Comparative Examples 4 to 6]

Results of Examples 201 to 212 and Comparative Examples 4 to 6 are shown in Table 4 provided below. The symbols "I", "II", and "III" in the fields of "Naked Eye", "Polarizing Sunglasses", "Clockwise Circular Polarizing Plate", and "Counterclockwise Circular Polarizing Plate" in Table 4 represent that the first display layer, the second display layer, and the third display layer were visible, respectively. Note that, in Table 4 described below, it is judged that the image of the display layer was able to be visually recognized not only in a case in which the image of the display layer was able to be visually recognized by the fact that the reflected light from the display layer was seen but also in a case in which the image of the display layer was able to be visually recognized by the fact that strong reflected light from the substrate at the area provided with no display layer was seen while reflected light from the display layer was not seen or was seen only slightly.

[Table 4]

[Table 4. Results of Examples 201 to 212 and Comparative Examples 4 to 6]

| | observation of display layer | | | | | observation of small-piece layers | |
|---|---|---|---|---|---|---|---|
| | naked eye | polarizing sunglasses | irradiation with polarized light (color) | clockwise circular polarizing plate | counter - clockwise circular polarizing plate | naked eye | microscope |
| example | | | | | | | |
| 201 | invisible | I | weak magenta | | | invisible | visible |
| 202 | invisible | I,II*1 | weak magenta | | | invisible | visible |
| 203 | invisible | I,II,III*2 | weak magenta | | | invisible | visible |
| 204 | invisible | invisible | | I | I | invisible | visible |
| 205 | invisible | invisible | | I,II | I,II | invisible | visible |
| 206 | invisible | II | | I,II*3 | I,II*3 | invisible | visible |
| 207 | I | | | I | invisible | invisible | visible |
| 208 | I,II | | | I | II | invisible | visible |
| 209 | I | | | I | invisible | invisible | visible |
| 210 | I,II | | | I | II | invisible | visible |
| 211 | invisible | I | black | | | invisible | visible |
| 212 | invisible | I | black*4 | | | invisible | visible |
| comparative example | | | | | | | |
| 4 | invisible | I | weak magenta | | | non | non |
| 5 | invisible | invisible | | I | I | non | non |
| 6 | I | | | I | invisible | non | non |

* 1:The first display layer and the second display layer were visually recognized at different rotation angles.
*2:The first display layer, the second display layer and the third display layer were visually recognized at different rotation angles.
*3:Weak reflected light was visually recognized at the second display layer.
*4:When the display medium was rotated around the fast axis of the first display layer as a rotation axis, color of the display layer that was visually recognized changed depending on incidence angle of polarized light.

[Discussion of Examples 201 to 212 and Comparative Examples 4 to 6]

It can be seen from Table 3 and Table 4 that, in Examples 201 to 203, 206, and 211 to 212 and Comparative Example 4, each of the samples can be visible in the polarizing sunglasses observation. Also, it was found that each of the samples might be visible even with the naked eye by being irradiated with polarized light emitted from the screens of a liquid crystal display and a smartphone.

In comparison between Example 201 and Example 211, it was found that the color visually recognized varied depending on whether the wavelength dispersion property of the small-piece layers included in the display layer was

reverse wavelength dispersion property or normal wavelength dispersion property.

In comparison between Example 201 and Example 212, it was found that different variety could be added to the image visually recognized per observation direction depending on the size of the angle (tilted angle) formed by the optical axis direction of the small-piece layers included in the display layer with respect to the layer plane.

In Examples 204 to 205 and 207 to 210 and Comparative Examples 5 to 6, it was found that the result was "visible" or was switched between "visible" and "invisible" by the observation through the circular polarizing plate.

It is apparent from these Examples that various types of display mode can be achieved by the difference of the observation method. In addition, the display layer of the sample in each of Examples includes the small-piece layers, which is not included in the display layer of the sample in each of Comparative Examples. It can be understood that the difficulty of counterfeiting can be increased due to the small-piece layers.

Reference Sign List

| | |
|---|---|
| 10 | display medium |
| 20 | display medium |
| 30 | display medium |
| 100 | substrate |
| 110 | support layer |
| 100U | surface of substrate |
| 200 | display layer |
| 210 | split |
| 211 | split line |
| 212 | split line |
| 220 | small-piece layer |
| 300 | primary member |
| 310 | temporary supporting body |
| 310U | surface of temporary supporting body |
| 320 | transfer material layer |
| 320U | surface of transfer material layer |
| 330 | small-piece layer |
| 340 | split |
| 340C | tip end of split |
| 341 | split line |
| 342 | split line |
| 350 | multilayer member |
| 360 | material layer |
| 360U | surface of multilayer member on the side provided with material layer |
| 400 | processing tool |
| 410 | convex portion of processing tool |
| 410T | top of convex portion |
| 420 | concave portion of processing tool |
| 430 | end of processing tool |
| 440 | end of processing tool |
| 450 | supporting tool |
| 500 | processing tool |
| 510 | convex portion of processing tool |
| 520 | concave portion of processing tool |
| 530 | end of processing tool |
| 540 | end of processing tool |
| 550 | supporting tool |
| 600 | substrate |
| 610 | colored layer |
| 700 | substrate |
| 710 | selective reflection layer |
| 800 | display medium |
| 810 | substrate |

820 adhesive layer
830 display layer

## Claims

1. A display medium comprising: a substrate; and a display layer provided on the substrate, wherein

   the display layer includes a plurality of small-piece layers sectioned by a split, and
   the plurality of small-piece layers are provided to be arrayed in two or more directions as viewed in a thickness direction.

2. The display medium according to claim 1, wherein a thickness of the small-piece layers is 10 μm or less.

3. The display medium according to claim 1 or 2, wherein the small-piece layers are formed of a cured product of a liquid crystal composition.

4. The display medium according to any one of claims 1 to 3, wherein an in-plane retardation of the small-piece layers at a measurement wavelength of 550 nm is "$\{(2n_1 + 1)/4\} \times 550$ nm - 30 nm" or more and "$\{(2n_1 + 1)/4\} \times 550$ nm + 30 nm" or less ($n_1$ represents an integer larger than or equal to 0).

5. The display medium according to any one of claims 1 to 3, wherein an in-plane retardation of the small-piece layers at a measurement wavelength of 550 nm is "$\{(2n_2 + 1)/2\} \times 550$ nm - 30 nm" or more and "$\{(2n_2 + 1)/2\} \times 550$ nm + 30 nm" or less ($n_2$ represents an integer larger than or equal to 0).

6. The display medium according to any one of claims 1 to 5, wherein the small-piece layers are one or more types selected from the group consisting of positive A plates, positive C plates, tilted O plates, and tilted hybrid orientation plates.

7. The display medium according to any one of claims 1 to 3, wherein the small-piece layers have a display wavelength range in which the small-piece layers are capable of reflecting circularly polarized light having one rotating direction $D_D$ and transmitting circularly polarized light having a rotating direction opposite to the rotating direction $D_D$.

8. The display medium according to any one of claims 1 to 7, wherein the substrate comprises a selective reflection layer having a substrate reflection range in which the selective reflection layer is capable of reflecting circularly polarized light having one rotating direction $D_S$ and transmitting circularly polarized light having a rotating direction opposite to the rotating direction $D_S$.

9. The display medium according to claim 7, wherein:

   the substrate comprises a selective reflection layer having a substrate reflection range in which the selective reflection layer is capable of reflecting circularly polarized light having one rotating direction $D_S$ and transmitting circularly polarized light having a rotating direction opposite to the rotating direction $D_S$; and
   a wavelength width of the substrate reflection range is wider than a wavelength width of the display wavelength range.

10. The display medium according to claim 8 or 9, wherein the wavelength width of the substrate reflection range is 70 nm or more.

11. The display medium according to any one of claims 1 to 10, comprising a plurality of the display layers.

12. The display medium according to any one of claims 1 to 11, wherein a shape of the small-piece layer as viewed in the thickness direction is a rectangle.

13. The display medium according to any one of claims 1 to 12, wherein a width of the small-piece layer as viewed in the thickness direction is 100 μm or less.

14. The display medium according to any one of claims 1 to 13, wherein the substrate includes a colored layer.

**15.** The display medium according to any one of claims 1 to 14, comprising an adhesive layer between the substrate and the display layer.

**16.** A method for producing the display medium according to any one of claims 1 to 15, comprising:

a step of preparing a primary member including a temporary supporting body and a transfer material layer formed on the temporary supporting body and including the small-piece layers;
a step of forming on the substrate an adhesive layer with a same shape as that of the display layer as viewed in the thickness direction;
a step of attaching the transfer material layer and the adhesive layer to each other; and
a step of detaching the temporary supporting body.

**17.** A display article comprising: a foundation article; and the display medium according to any one of claims 1 to 15 provided on the foundation article.

FIG.1

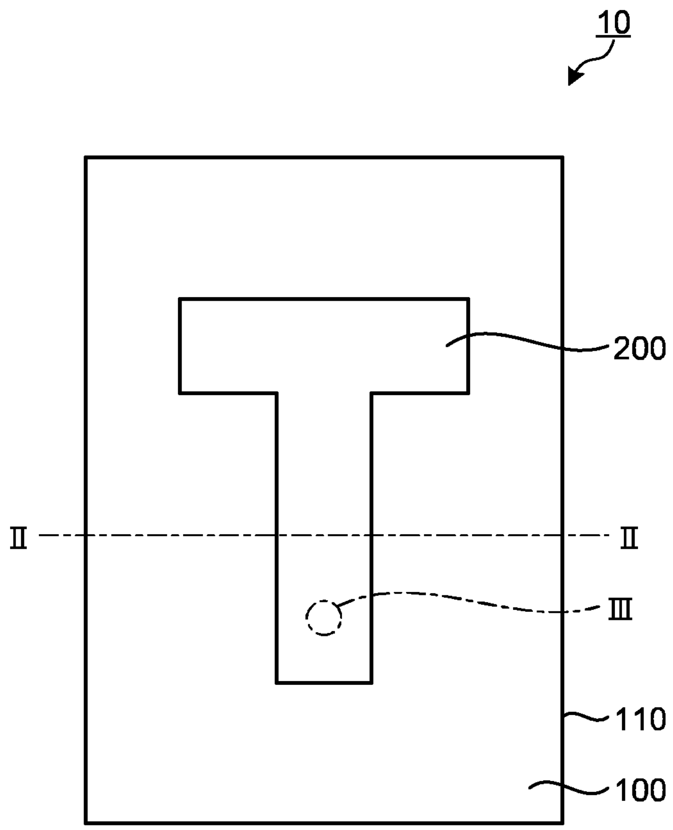


FIG.2

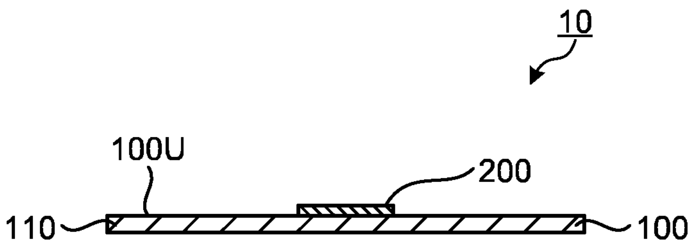

FIG.3

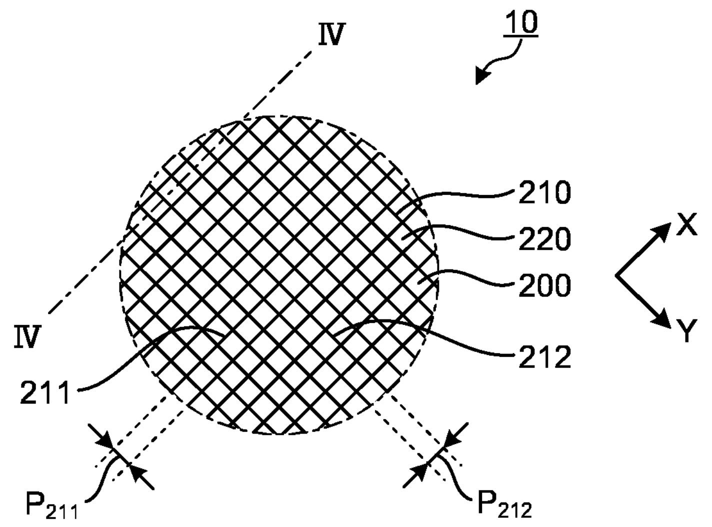
10
IV
IV
210
220
200
212
211
X
Y
$P_{211}$
$P_{212}$

FIG.4

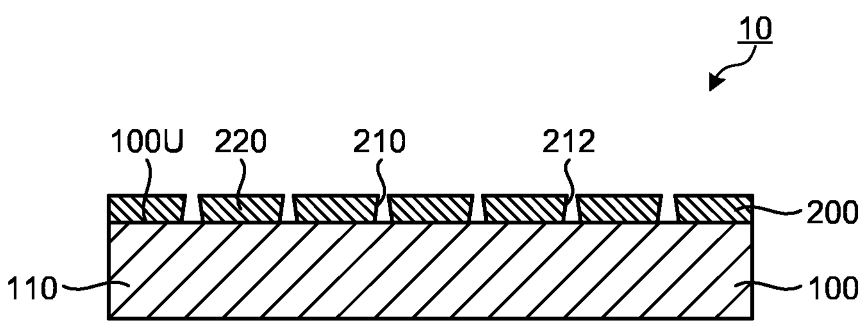
10
100U
220
210
212
200
110
100

FIG.5

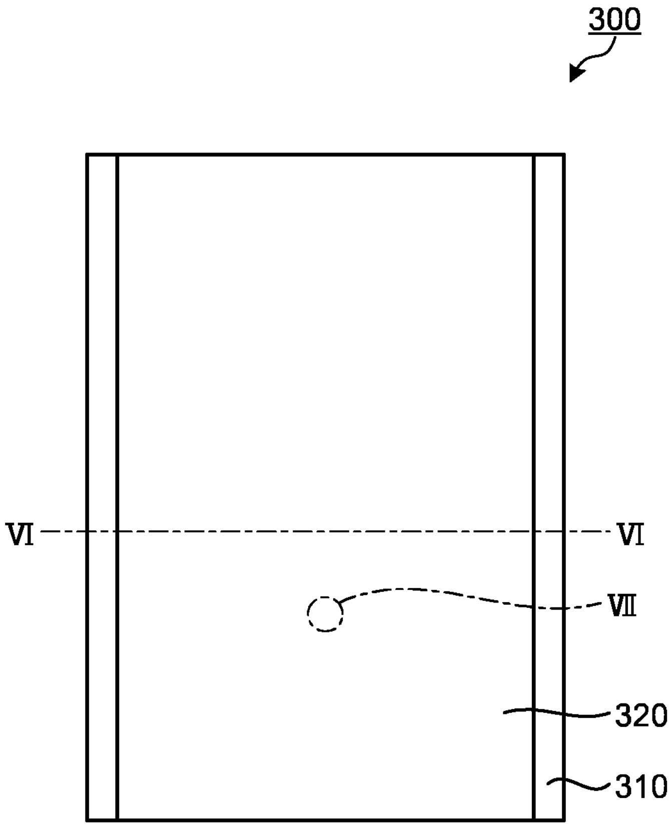


FIG.6

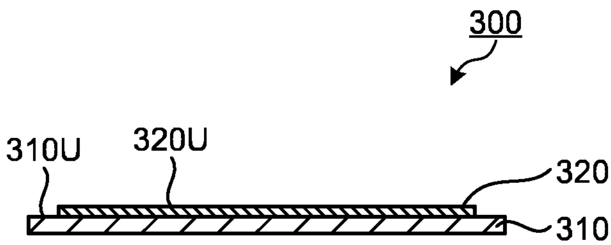

FIG.7

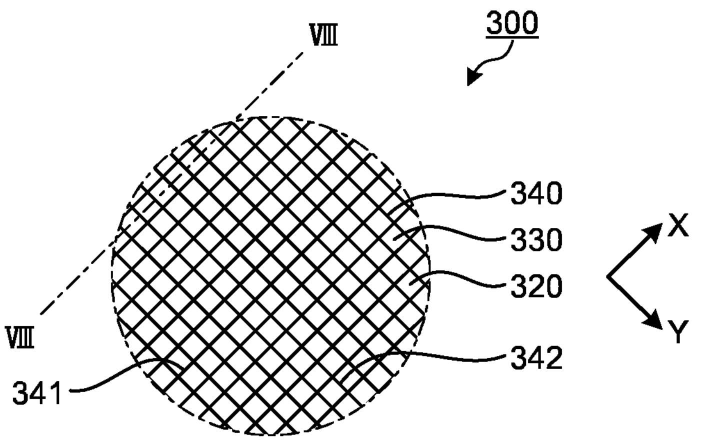
300
VIII
VIII
340
330
320
342
341
X
Y

FIG.8

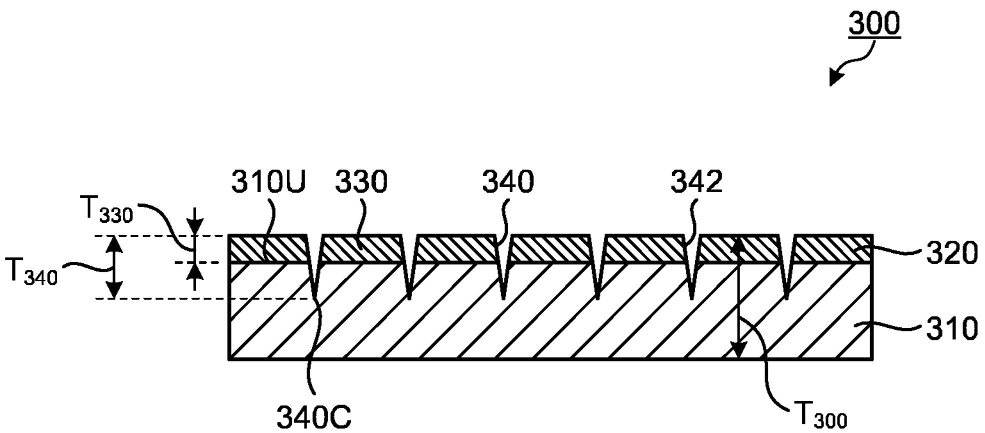
300
310U
330
340
342
$T_{330}$
$T_{340}$
320
310
340C
$T_{300}$

FIG.9

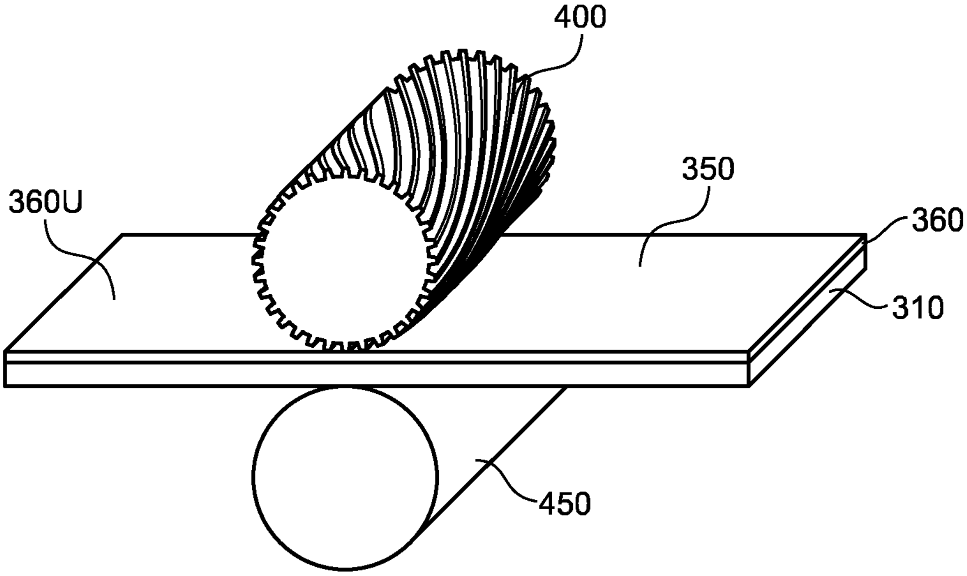


FIG.10

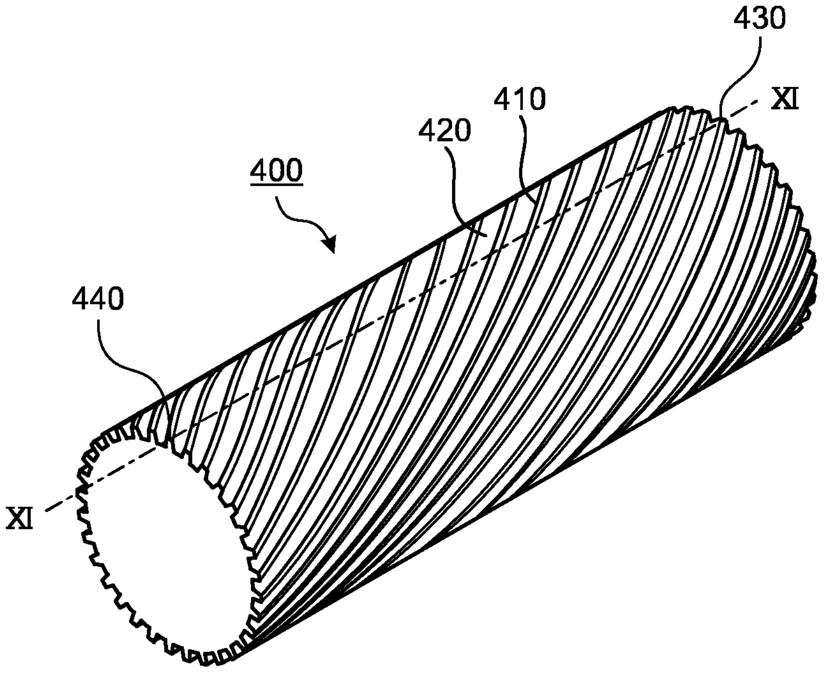

FIG.11

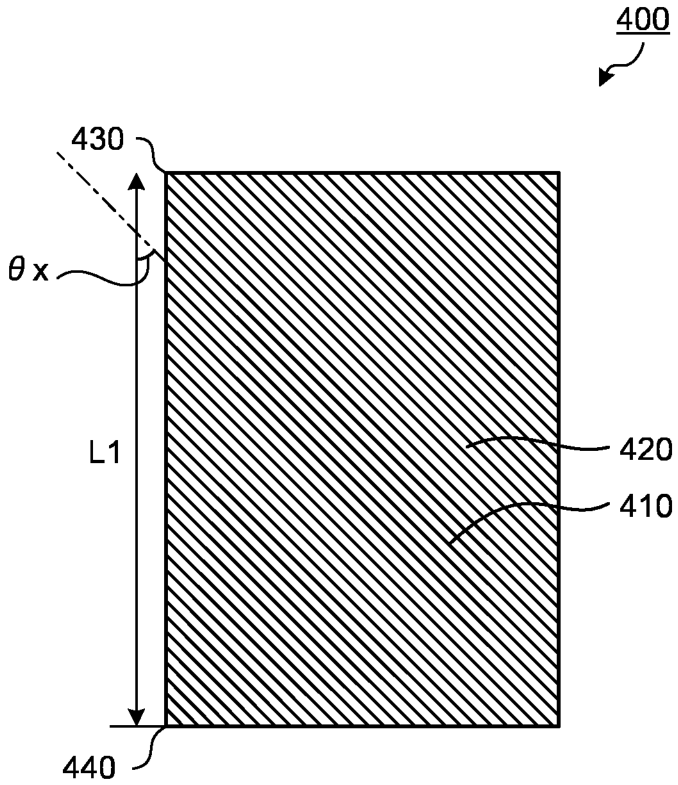


FIG.12

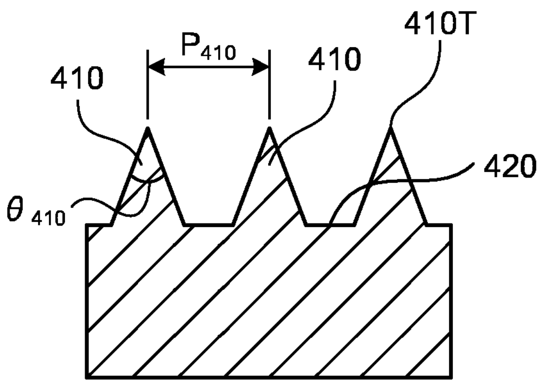

FIG.13

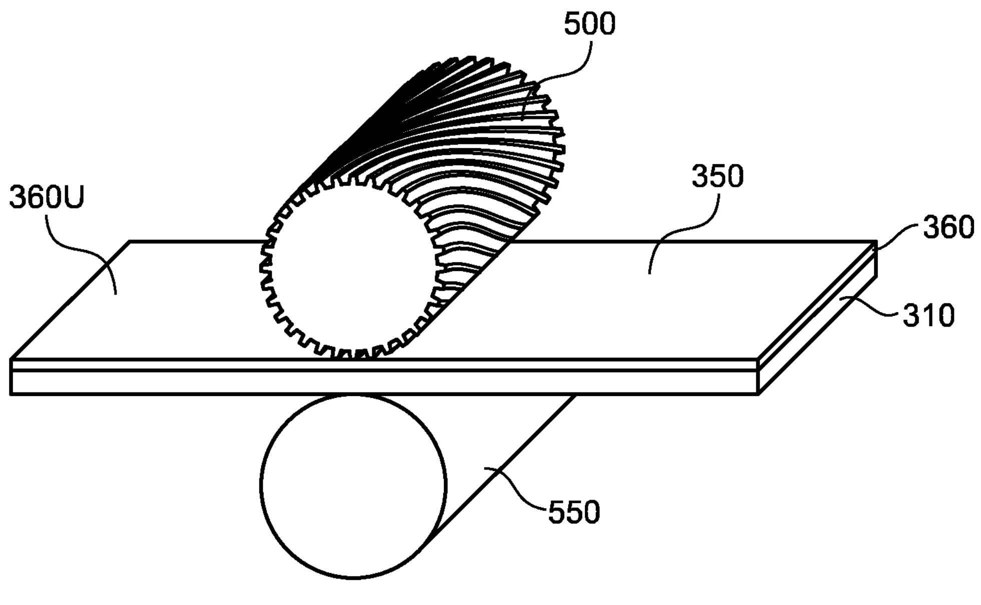

FIG.14

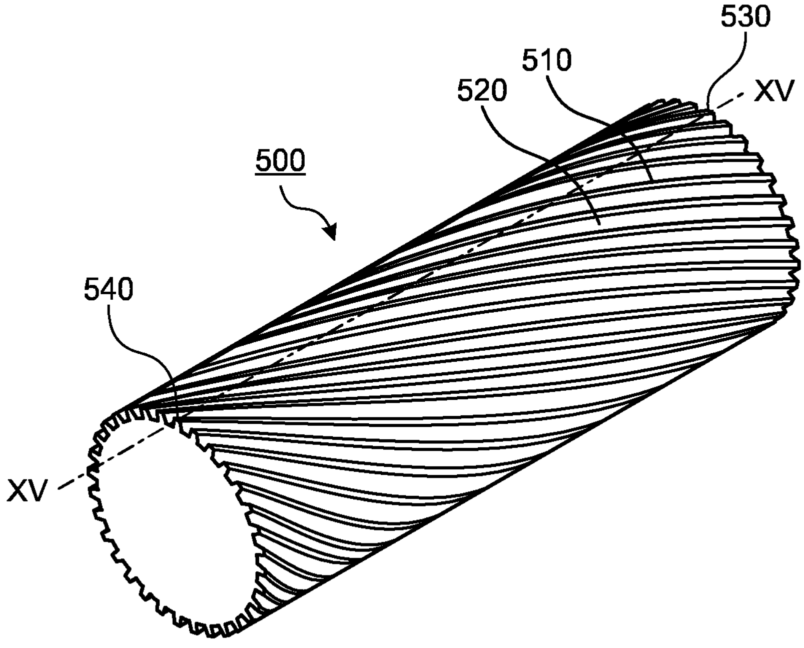


FIG.15

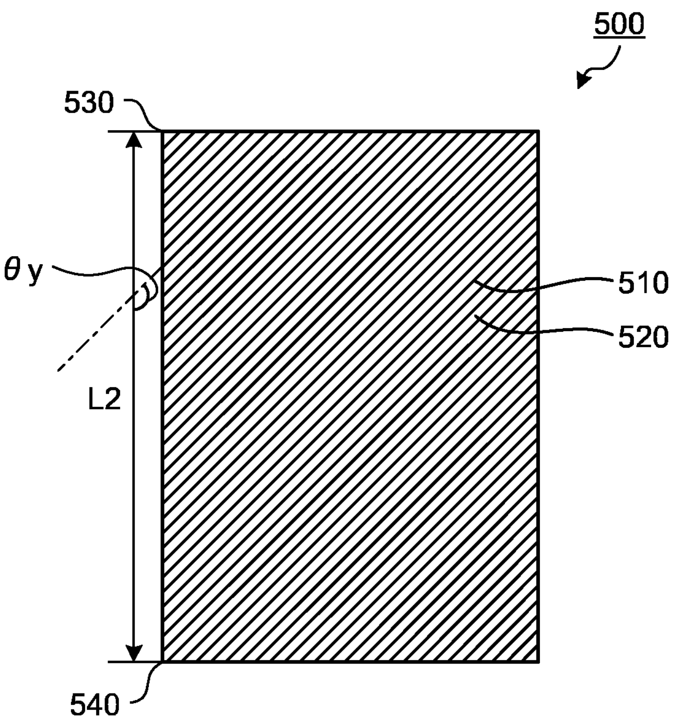

FIG.16

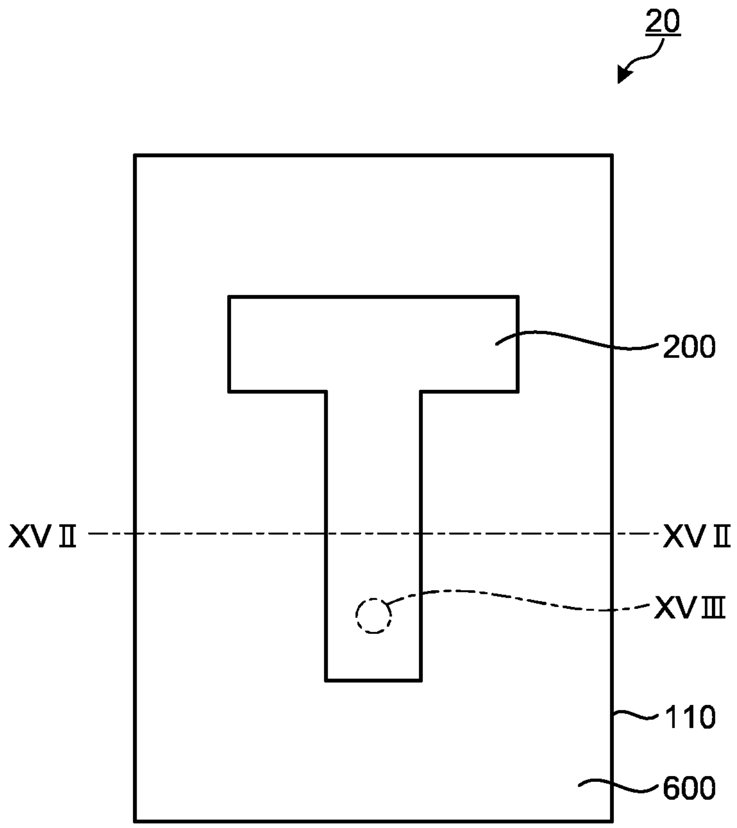


FIG.17

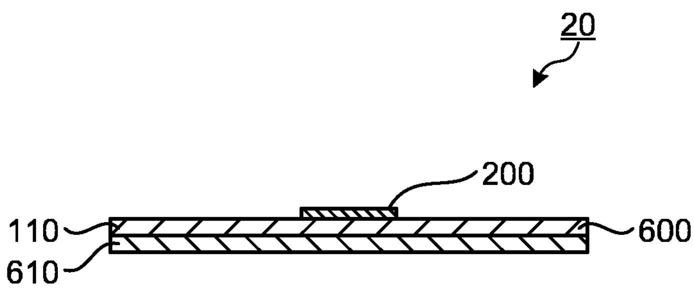

FIG.18

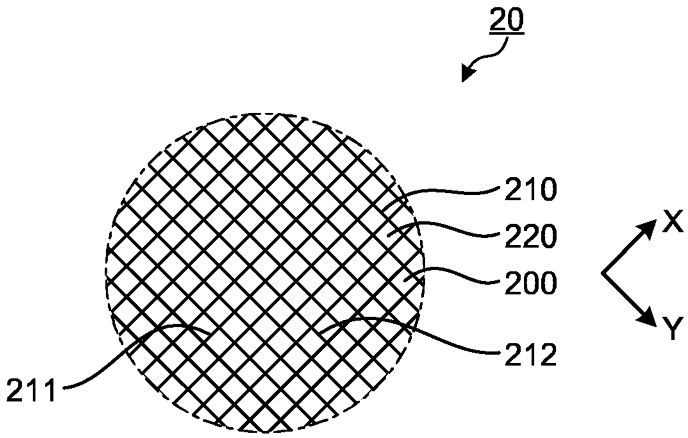

FIG.19

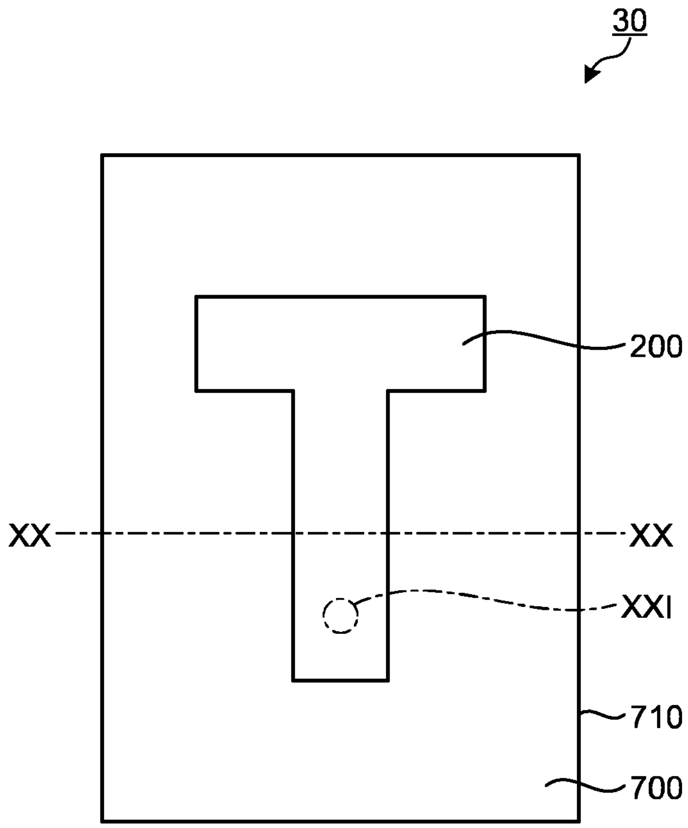


FIG.20

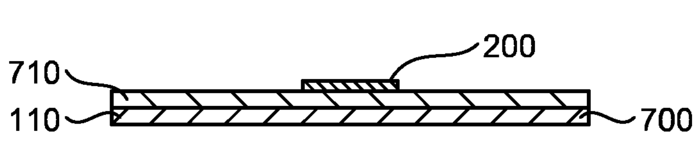

FIG.21

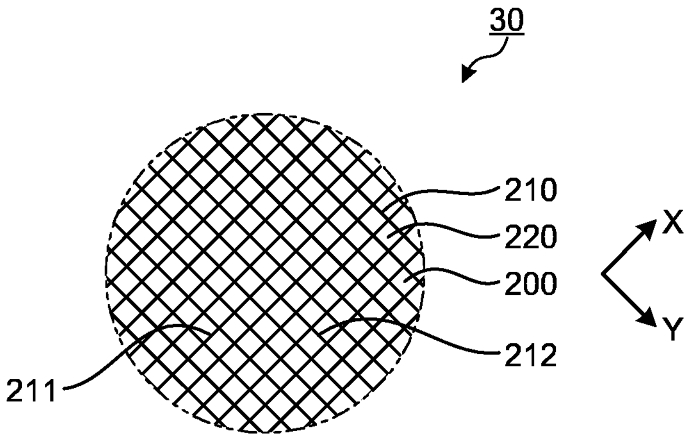

FIG.22

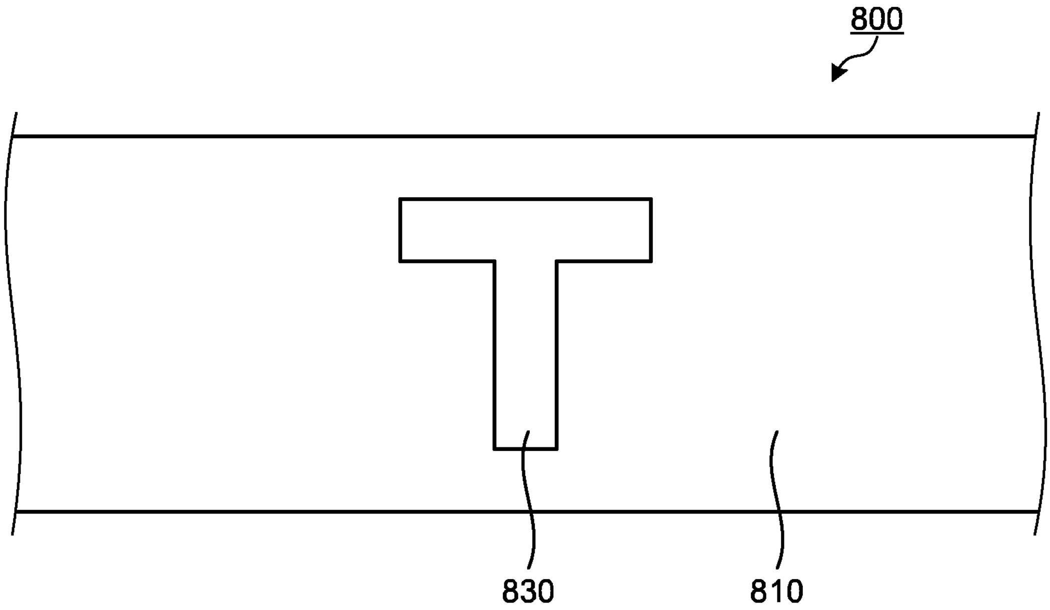


FIG.23

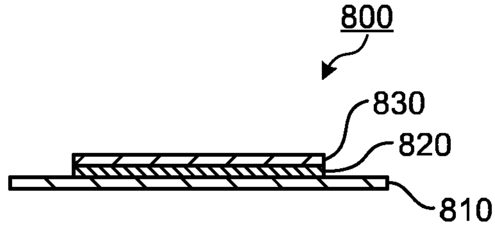

## INTERNATIONAL SEARCH REPORT

International application No. PCT/JP2021/007544

A. CLASSIFICATION OF SUBJECT MATTER
G02B 5/30(2006.01)i; B42D 25/364(2014.01)i; B42D 25/391(2014.01)i; B32B 7/12(2006.01)i; B32B 3/14(2006.01)i
FI: G02B5/30; B42D25/364; B42D25/391; B32B3/14; B32B7/12
According to International Patent Classification (IPC) or to both national classification and IPC

B. FIELDS SEARCHED
Minimum documentation searched (classification system followed by classification symbols)
G02B5/30; B42D25/364; B42D25/391; B32B7/12; B32B3/14

Documentation searched other than minimum documentation to the extent that such documents are included in the fields searched

| | |
|---|---|
| Published examined utility model applications of Japan | 1922-1996 |
| Published unexamined utility model applications of Japan | 1971-2021 |
| Registered utility model specifications of Japan | 1996-2021 |
| Published registered utility model applications of Japan | 1994-2021 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X<br>Y | JP 2011-128270 A (TOPPAN PRINTING CO., LTD.) 30 June 2011 (2011-06-30) paragraphs [0001], [0020]-[0022], [0035], [0052]-[0053], fig. 1 | 1-17<br>16 |
| X<br>Y | JP 2012-83655 A (TOPPAN PRINTING CO., LTD.) 26 April 2012 (2012-04-26) paragraphs [0001], [0012]-[0014], [0020], [0029], [0040]-[0041], fig. 1 | 1-15, 17<br>16 |
| X<br>A | JP 2016-210005 A (THE PILOT INK CO., LTD.) 15 December 2016 (2016-12-15) paragraphs [0001], [0008], [0014], [0039], fig. 1 | 1-15, 17<br>16 |
| A | WO 2019/189246 A1 (ZEON CORP.) 03 October 2019 (2019-10-03) paragraphs [0014]-[0019], [0103]-[0106] | 1-17 |

☒ Further documents are listed in the continuation of Box C. ☒ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 12 April 2021 (12.04.2021) | 20 April 2021 (20.04.2021) |
| Name and mailing address of the ISA/<br>Japan Patent Office<br>3-4-3, Kasumigaseki, Chiyoda-ku,<br>Tokyo 100-8915, Japan | Authorized officer<br><br>Telephone No. |

Form PCT/ISA/210 (second sheet) (January 2015)

**INTERNATIONAL SEARCH REPORT**

International application No.
PCT/JP2021/007544

C (Continuation). DOCUMENTS CONSIDERED TO BE RELEVANT

| Category* | Citation of document, with indication, where appropriate, of the relevant passages | Relevant to claim No. |
|---|---|---|
| A | WO 2019/057322 A1 (GIESECKE+DEVRIENT CURRENCY TECHNOLOGY GMBH) 28 March 2019 (2019-03-28) page 11, line 8 to page 17, line 3, fig. 1-6 | 1-17 |

Form PCT/ISA/210 (continuation of second sheet) (January 2015)

**INTERNATIONAL SEARCH REPORT**
Information on patent family members

International application No.
PCT/JP2021/007544

| Patent Documents referred in the Report | Publication Date | Patent Family | Publication Date |
|---|---|---|---|
| JP 2011-128270 A | 30 Jun. 2011 | (Family: none) | |
| JP 2012-83655 A | 26 Apr. 2012 | (Family: none) | |
| JP 2016-210005 A | 15 Dec. 2016 | (Family: none) | |
| WO 2019/189246 A1 | 03 Oct. 2019 | EP 3778171 A1 paragraphs [0015]-[0024], [0119]-[0128] TW 201942258 A | |
| WO 2019/057322 A1 | 28 Mar. 2019 | US 2020/291238 A1 paragraphs [0043]-[0071], fig. 1-6 CN 111032791 A | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2010105327 A
- JP 2014174471 A
- JP 4630465 B
- JP 2007057971 A
- JP 2014069515 A
- JP 2015064581 A
- JP 2019163611 A
- JP 2019146468 A
- WO 2017057005 A
- WO 2019188519 A